(19) Europäisches Patentamt / European Patent Office / Office européen des brevets

(11) **EP 3 736 108 B1**

(12) **EUROPÄISCHE PATENTSCHRIFT**

(45) Veröffentlichungstag und Bekanntmachung des Hinweises auf die Patenterteilung:
**30.08.2023   Patentblatt 2023/35**

(21) Anmeldenummer: **20172870.6**

(22) Anmeldetag: **05.05.2020**

(51) Internationale Patentklassifikation (IPC):
**B29C 64/209** (2017.01)      **B29C 64/118** (2017.01)
**B33Y 80/00** (2015.01)       **B33Y 50/02** (2015.01)
**B33Y 30/00** (2015.01)       **B33Y 10/00** (2015.01)
**B29C 70/88** (2006.01)       **B29C 70/38** (2006.01)
**B29C 64/393** (2017.01)      **B29C 64/227** (2017.01)
**B29C 70/16** (2006.01)

(52) Gemeinsame Patentklassifikation (CPC):
**B29C 64/118; B29C 64/209; B29C 64/227;
B29C 70/38; B33Y 10/00; B33Y 30/00;
B33Y 80/00;** B29C 70/16

(54) **VORRICHTUNG UND VERFAHREN ZUR ADDITIVEN FERTIGUNG EINES DREIDIMENSIONALEN OBJEKTS**

DEVICE AND METHOD FOR ADDITIVE MANUFACTURE OF A THREE-DIMENSIONAL PRODUCT

DISPOSITIF ET PROCÉDÉ DE FABRICATION ADDITIVE D'UN OBJET TRIDIMENSIONNEL

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **06.05.2019   DE 102019111620**

(43) Veröffentlichungstag der Anmeldung:
**11.11.2020   Patentblatt 2020/46**

(73) Patentinhaber: **Hochschule Aalen
73430 Aalen (DE)**

(72) Erfinder:
 • **Krieger, Julia
   73434 Aalen (DE)**
 • **Pohl, Mario
   73457 Essingen (DE)**
 • **Börret, Rainer
   73433 Aalen (DE)**

(74) Vertreter: **Schmid, Wolfgang
Lorenz & Kollegen
Patentanwälte Partnerschaftsgesellschaft mbB
Alte Ulmer Strasse 2
89522 Heidenheim (DE)**

(56) Entgegenhaltungen:
WO-A1-2018/039260      DE-A1-102017 008 130
US-A1- 2015 102 526      US-A1- 2016 375 640
US-A1- 2017 232 679      US-A1- 2017 259 502

• **GOPSILL JAMES A. ET AL: "Using finite element analysis to influence the infill design of fused deposition modelled parts", PROGRESS IN ADDITIVE MANUFACTURING, [Online] vol. 3, no. 3, 28 November 2017 (2017-11-28), pages 145-163, XP055795513, DE ISSN: 2363-9512, DOI: 10.1007/s40964-017-0034-y Retrieved from the Internet: URL:http://link.springer.com/content/pdf/1 0.1007/s40964-017-0034-y.pdf> [retrieved on 2021-10-01]**

**Beschreibung**

Die Erfindung betrifft eine Vorrichtung zur additiven Fertigung eines dreidimensionalen Objekts aus wenigstens einem Ausgangsmaterial, aufweisend eine Steuereinrichtung, eine in mehreren Freiheitsgraden bewegliche Aktuatoreinrichtung und einen Extruder oder Druckkopf, gemäß dem Anspruch 1.

Die Erfindung betrifft ferner ein Verfahren zur additiven Fertigung eines dreidimensionalen Objekts aus wenigstens einem Ausgangsmaterial, gemäß dem Anspruch 3.

Vorrichtungen und Verfahren zur additiven Fertigung von dreidimensionalen Objekten werden bekanntermaßen zur Fertigung von Modellen, Prototypen, Werkzeugen und Endprodukten eingesetzt. Dabei werden Ausgangsmaterialien in Form von Flüssigkeiten, Pulver oder Filamenten aus thermoplastischen Kunststoffen von einem an einem Endeffektor einer Aktuatoreinrichtung befestigten Extruder oder einem anderen Druckkopf schichtweise abgeschieden, um auf Grundlage von 3D-Daten des zu fertigenden Objekts das Objekt schichtweise aufzubauen. Das genannte Verfahren kann unter anderem auch als generatives Fertigungsverfahren oder 3D-Druckverfahren bezeichnet werden.

Zum Hintergrund wird beispielhaft auf die DE 10 2009 046 440 A1 verwiesen, die eine Vorrichtung und ein Verfahren zur generativen Herstellung eines Bauteils betrifft, bei dem ein formloses oder pulverförmiges Ausgangsmaterial durch einen chemischen oder physikalischen Prozess in Abhängigkeit von einem Datenmodell des herzustellenden Bauteils verfestigt wird.

Die Qualität der hierdurch gefertigten Objekte kann allerdings je nach verwendeter additiver Fertigungstechnologie unterschiedlich sein.

Die gattungsgemäße DE 11 2014 006 195 T5 betrifft die Erzeugung eines dreidimensionalen Objekts mit einem additiven Fertigungssystem. Dabei wird insbesondere die Problematik der schwankenden Qualität der hergestellten Objekte thematisiert. Beispielsweise wird ausgeführt, dass es durch die schichtweise Fertigung zu sogenannten Treppeneffekten kommt, wodurch eine vergleichsweise raue und ungenaue Oberflächenstruktur entsteht. Als Verbesserung wird in der DE 11 2014 006 195 T5 das selektive Auftragen von Koaleszenzmitteln auf einen Teilbereich einer ersten auf einem Trägerelement befindlichen Schicht des Werkstoffs oder einer vorangegangenen Schicht vorgeschlagen. Anschließend soll die erste Schicht mit Energie beaufschlagt werden, um zu bewirken, dass ein Teilbereich der ersten Schicht koalesziert und sich verfestigt. Anschließend kann eine zweite Schicht Werkstoff auf die erste Schicht aufgebracht werden. Obwohl auf die zweite Schicht kein Koaleszenzmittel aufgebracht wurde, kann die zweite Schicht mit Energie beaufschlagt werden, so dass die Energie sich durch die zweite Schicht zur ersten Schicht ausbreitet und bewirkt, dass die erste Schicht koalesziert und sich weiter verfestigt. Hierdurch könne bei der Fertigung dreidimensionaler Objekte eine vergleichsweise hohe Qualität erreicht werden.

Der technische und wirtschaftliche Aufwand zur Realisierung des Verfahrens ist allerdings hoch und das Verfahren außerdem vergleichsweise unflexibel einsetzbar.

Ein weiteres Problem der bekannten additiven Fertigungsverfahren ist, dass die Objekteigenschaften der "gedruckten" Objekte nur bedingt vorgebbar sind. Die Anwendungsgebiete der additiv gefertigten Objekte sind damit stark eingeschränkt. Insbesondere ist keine bauteilangepasste Planung der Druckbahnen zur Erhöhung der lokalen Festigkeit des zu fertigenden Objekts oder eine unkomplizierte Kombination verschiedener Technologien (Druck, Faserverbünde, funktionale Werkstoffe, hybride Bauteile, Nachbearbeitung) in einem gemeinsamen Drucker möglich.

Ergänzend sei noch auf den nachfolgenden Stand der Technik verwiesen.

Die US 2017/259502 A1 betrifft eine additive Fertigungsvorrichtung mit einer in mehreren Freiheitsgraden beweglichen Aktuatoreinrichtung, um einen Druckkopf zur Abscheidung eines Filaments in zumindest vier Freiheitsgraden zu bewegen, wobei die Druckbahnen auf Grundlage eines Simulationsmodells bestimmt werden, um durch Vorgabe von Ausrichtung und Verlauf der abzuscheidenden Schichten die Bauteileigenschaften des zu fertigenden Objekts vorzugeben.

Die WO 2018/039260 A1 betrifft ein mehrachsiges, additives Fertigungssystem, umfassend einen Roboterarm, der in sechs Freiheitsgraden beweglich ist. Das System umfasst eine Bauplattform, die in mindestens zwei Freiheitsgraden beweglich und unabhängig von der Bewegung des Roboterarms ist, um das zu fertigende Objekt so zu positionieren, dass Schwerkrafteffekten auf der Grundlage der Teilegeometrie entgegengewirkt wird. Das System umfasst einen Extruder, der an einem Ende des Roboterarms angebracht ist.

Die US 2017/232679 A1 betrifft die additive Herstellung eines Verbundwerkstoffs auf Grundlage einer aushärtbaren Flüssigkeit und einem abscheidbaren, zweiten Material auf einer Plattform. Die Plattform ist in einem Reservoir des flüssigen, ersten Materials höhenverstellbar und schwenkbar.

In Anbetracht des bekannten Stands der Technik besteht die Aufgabe der vorliegenden Erfindung darin, eine verbesserte Vorrichtung zur additiven Fertigung bereitzustellen, bei der die Objekteigenschaften des herzustellenden dreidimensionalen Objekts flexibel vorgebbar sind.

Der vorliegenden Erfindung liegt auch die Aufgabe zugrunde, ein verbessertes Verfahren zur additiven Fertigung bereitzustellen, bei dem die Objekteigenschaften des herzustellenden dreidimensionalen Objekts flexibel vorgebbar sind.

Schließlich ist es auch Aufgabe der Erfindung, ein Computerprogrammprodukt zur Durchführung eines verbesserten Verfahrens zur additiven Fertigung bereitzustellen.

Die Aufgabe wird für die Vorrichtung mit den in Anspruch 1 aufgeführten Merkmalen gelöst. Hinsichtlich des Verfahrens wird die Aufgabe durch die Merkmale des Anspruchs 3 gelöst.

Die abhängigen Ansprüche und die nachfolgend beschriebenen Merkmale betreffen vorteilhafte Ausführungsformen und Varianten der Erfindung.

Es ist eine Vorrichtung zur additiven Fertigung eines dreidimensionalen Objekts aus wenigstens einem Ausgangsmaterial vorgesehen.

Bei dem Ausgangsmaterial kann es sich um einen Kunststoff, insbesondere einen thermoplastischen Kunststoff, aber auch um Metalle und Legierungen handeln. Im Rahmen der Erfindung können grundsätzlich beliebige Ausgangsmaterialien zur additiven Fertigung des dreidimensionalen Objekts vorgesehen sein.

Grundsätzlich kann das erfindungsgemäß gefertigte dreidimensionale Objekt aus einem, zwei, drei, vier oder noch mehr Ausgangsmaterialien hergestellt werden. Beispielsweise können verschiedene Kunststoffe, Metalle und Legierungen beliebig miteinander kombiniert werden. Es können grundsätzlich auch Ausgangsmaterialien miteinander kombiniert werden, die sich lediglich in ihren optischen Eigenschaften, beispielsweise der Farbe oder dem Transmissionsgrad, unterscheiden.

Erfindungsgemäß weist die Vorrichtung eine Steuereinrichtung auf, die auf Grundlage von 3D-Daten des Objekts zur Berechnung von Druckbahnen für abzuscheidende Schichten des Ausgangsmaterials eingerichtet ist. Die Vorrichtung weist ferner eine in mehreren Freiheitsgraden bewegliche Aktuatoreinrichtung mit einem Endeffektor und einen an dem Endeffektor befestigten Extruder oder anderen Druckkopf auf. Die Aktuatoreinrichtung und der Extruder (oder der andere Druckkopf) sind mit der Steuereinrichtung kommunikationsverbunden, um das Ausgangsmaterial nach Vorgabe der Steuereinrichtung in Abhängigkeit der berechneten Druckbahnen schichtweise aus dem Extruder/Druckkopf abzuscheiden.

Ein Extruder ist ein bekanntes Bauteil aus der additiven Fertigung und eingerichtet, um das Ausgangsmaterial, beispielsweise ein Filament, zu schmelzen und in flüssiger Form auszugeben. Der Extruder kann auch als Druckkopf für den 3D-Druck bezeichnet werden. Zur Zuführung des Filaments kann beispielsweise eine Transporteinrichtung mit einem Schrittmotor vorgesehen sein. Zum Abscheiden des Materials weist der Extruder an seinem sogenannten "Hot End" eine Heizeinrichtung und eine Düse auf. Auf den spezifischen Aufbau des Extruders kommt es erfindungsgemäß allerdings nicht an.

Grundsätzlich aber nicht erfindungsgemäß kann an Stelle eines Extruders auch ein beliebiger anderer Druckkopf für die additive Fertigung vorgesehen sein. Ergänzend kann ein Kopf zur Nachbehandlung mit einem Laserschmelzverfahren (SLS) verwendet werden. Nachfolgend ist die Erfindung aus Gründen der Anschaulichkeit vornehmlich mit einem Extruder zur Abscheidung eines Filaments beschrieben.

Bei den 3D-Daten des Objekts handelt es sich insbesondere um dreidimensionale CAD-Daten. Das Objekt kann in den Daten insbesondere durch Punktewolken, Kantenmodelle, Flächenmodelle und/oder Volumenmodelle repräsentiert sein.

Die Steuereinrichtung kann eingerichtet sein, um aus den 3D-Daten des Objekts ein virtuelles Modell des Objekts im bekannten STL-Format ("Standard Triangulation/Tesselation Language"-Format) zu berechnen. Im Rahmen des STL-Formats können die Objektdaten mit Hilfe von Dreiecksfacetten beschrieben werden. Das Prinzip ist bekannt und wird demnach nicht näher beschrieben. Eine STL-Schnittstelle ist eine Standardschnittstelle vieler CAD-Systeme. Vorliegend kann die Steuereinrichtung eingerichtet sein, um aus beliebigen 3D-CAD-Daten zunächst STL-Daten für die Weiterverarbeitung zu berechnen. Die Steuereinrichtung kann allerdings auch eingerichtet sein, bereits 3D-Daten im STL-Format aufzunehmen und weiterzuverarbeiten. Grundsätzlich kann auch ein beliebiges anderes Datenformat vorgesehen sein.

Unabhängig davon, ob die STL-Daten von der Steuereinrichtung selbst erzeugt oder nur an diese übertragen wurden, kann die Steuereinrichtung eingerichtet sein, um anhand der STL-Daten (oder anhand sonstiger 3D-Daten) die Objektdaten in Druckerdaten für einen 3D-Druck (bzw. für die additive Fertigung) umzuwandeln. Hierfür kann unter anderem vorgesehen sein, die 3D-Daten bzw. STL-Daten in einzelne zu druckende Schichten umzuwandeln (sogenanntes "Slicen"), wonach für die einzelnen Schichten die Druckbahnen bzw. der Werkzeugpfad berechnet werden, um die Bewegungen des Druckkopfes bzw. des Extruders vorzugeben. Erfindungsgemäß ist vorgesehen, dass die Aktuatoreinrichtung in zumindest vier Freiheitsgraden beweglich ist, wobei die Steuereinrichtung die Druckbahnen unter Berücksichtigung von Bahnabständen, Ausrichtung und/oder Verlauf der abzuscheidenden Schichten auf Grundlage eines Simulationsmodells berechnet, um Bauteileigenschaften des Objekts vorzugeben. Dadurch, dass die Aktuatoreinrichtung in zumindest vier Freiheitsgraden beweglich ist, kann der Extruder bzw. Druckkopf die einzelnen Bahnen der jeweiligen Schicht mit höherer Flexibilität abscheiden als bei einem herkömmlichen 3D-Druck, bei dem die Aktuatoreinrichtung in lediglich drei Freiheitsgraden bzw. Raumrichtungen beweglich ist (z. B. der Bauteilgeometrie folgend).

Die Steuereinrichtung kann somit die Druckbahnen für die abzuscheidenden Schichten mit grö-ßerer Flexibilität berechnen und Bahnabstände, Ausrichtung und/oder Verlauf der abzuscheidenden Schichten im Hinblick auf die gewünschten Bauteileigenschaften des Objekts vorgeben.

Die Steuereinrichtung ist dazu eingerichtet, die Bahnabstände einzelner Druckbahnen einer Schicht, die Ausrichtung von Druckbahnen zu anderen Druckbahnen derselben oder einer anderen Schicht und/oder den Verlauf der Schichten (Ausrichtung des Faserverlaufs der Schichten in dem Bauteil) vorzugeben. Es können allerdings auch noch weitere Vorgaben durch die Steuereinrichtung erfolgen, die sich durch eine erhöhte Anzahl Freiheitsgrade der Aktuatoreinrichtung beeinflussen lassen, um die Bauteileigenschaften des Objekts vorzugeben.

Vorteilhafterweise kann dadurch eine bauteilangepasste Planung der Bahnabstände, zum Beispiel bei Faserverbundwerkstoffen, zur Erhöhung der lokalen Festigkeit möglich sein. Ferner kann die Anpassung der Materialparameter, zum Beispiel Festigkeit, über die Lage und Orientierung von Freiformschichten des Objekts von Schicht zu Schicht und von Bahn zu Bahn über variierende Bahnabstände möglich sein. Außerdem kann die Oberflächenqualität bzw. die Oberflächengüte des Objekts erfindungsgemäß verbessert sein, insbesondere durch Vermeiden eines Treppeneffekts zwischen den einzelnen Schichten.

Die Erfinder haben erkannt, dass es von Vorteil ist, ein Simulationsmodell (oder mehrere Simulationsmodelle) zur Bestimmung eines Zusammenhangs zwischen Bahnabständen, Ausrichtung und/oder Verlauf der abzuscheidenden Schichten zu den Bauteileigenschaften des geplanten Objekts im Rahmen der Berechnung der Druckbahnen innerhalb der Steuereinrichtung vorzusehen. Durch das Simulationsmodell in Kombination mit der hohen Flexibilität bei der Ansteuerung der Aktuatoreinrichtung in zumindest vier Freiheitsgraden lassen sich die Objekteigenschaften des herzustellenden dreidimensionalen Objekts besonders flexibel bestimmten.

Die Einsatzmöglichkeiten der erfindungsgemäß hergestellten dreidimensionalen Objekte können dadurch verglichen mit Objekten, die durch einen herkömmlichen 3D-Druck hergestellt wurden, deutlich erhöht sein.

Vorzugsweise ist die Aktuatoreinrichtung in allen drei Translationsfreiheitsgraden beweglich sowie in zumindest einem Rotationsfreiheitsgrad.

Hierdurch kann eine Ansteuerung der Aktuatoreinrichtung bzw. des an dem Endeffektor befestigten Extruders oder Druckkopfes wie bei einem herkömmlichen 3D-Druck erfolgen, wobei zusätzlich ein Verkippen des Extruders bzw. Druckkopfes in eine Raumrichtung möglich ist.

Vorzugsweise kann während des Abscheidens einer Schicht auch die Höhenebene des Extruders/Druckkopfes ("z-Richtung") verändert werden, was bei einem herkömmlichen 3D-Druck nicht bzw. nur bei einem Schichtübergang vorgesehen ist.

Die Aktuatoreinrichtung kann als Roboter bzw. Industrie-Roboter ausgebildet sein. Beispielsweise kann ein Sechs-Achs-Roboter oder ein anderes Bewegungssystem, zum Beispiel ein Hexapod oder ein Fünf-Achs-System oder auch eine Kombination aus mehreren Bewegungseinheiten vorgesehen sein.

In einer vorteilhaften Weiterbildung der Erfindung kann vorgesehen sein, dass die Aktuatoreinrichtung in vier Freiheitsgraden, vorzugsweise in fünf Freiheitsgraden oder mehr Freiheitsgraden und besonders bevorzugt in sechs Freiheitsgraden, beweglich ist.

Vorzugsweise ist die Aktuatoreinrichtung in allen drei Translationsfreiheitsgraden und zusätzlich in zwei Rotationsfreiheitsgraden, besonders bevorzugt in drei Rotationsfreiheitsgraden, beweglich. Hierdurch ist ein Verkippen in zwei Raumrichtungen sowie vorzugsweise auch ein Verdrehen des Extruders oder Druckkopfes in Kombination mit einer Translationsbewegung möglich.

Gemäß einer Weiterbildung der Erfindung kann vorgesehen sein, dass eine Wechseleinrichtung zum Auswechseln des Extruders oder Druckkopfes vorgesehen ist, um Druckbahnen aus verschiedenen Ausgangsmaterialien abscheiden zu können, oder dass der Extruder bzw. Druckkopf ausgebildet ist, um Druckbahnen aus verschiedenen Ausgangsmaterialien abzuscheiden.

Beispielsweise kann vorgesehen sein, dass der Extruder/Druckkopf an dem Endeffektor der Aktuatoreinrichtung manuell oder vorzugsweise automatisch austauschbar ist, wobei jeder Extruder/Druckkopf zum Abscheiden eines spezifischen Ausgangsmaterials eingerichtet ist.

Ein gewünschter Extruder oder Druckkopf zum Abscheiden eines spezifischen Ausgangsmaterials kann beispielsweise aus einer für die Aktuatoreinrichtung zugänglichen Sammlung von Extrudern bzw. Druckköpfen auswählbar sein. Beispielsweise können mehrere Extruder/Druckköpfe in einer Reihe nebeneinander in Reichweite der Aktuatoreinrichtung aufgehängt sein, so dass die Aktuatoreinrichtung mit ihrem Endeffektor einen gewünschten Extruder bzw. Druckkopf herausgreifen bzw. den an dem Endeffektor befestigten Extruder oder Druckkopf austauschen kann.

Es kann auch vorgesehen sein, dass der Extruder oder Druckkopf ausgebildet ist, um wahlweise eines aus mehreren Ausgangsmaterialien abzuscheiden. Hierzu kann der Extruder beispielsweise mehrere Düsen aufweisen.

Außerdem kann vorgesehen sein, dass mehrere Extruder oder mehrere Druckköpfe an dem Endeffektor der Aktuatoreinrichtung befestigt sind, beispielsweise zwei, drei, vier oder noch mehr Extruder oder Druckköpfe, wobei jeder der einzelnen Extruder oder Druckkopf ausgebildet ist, um zumindest ein Ausgangsmaterial abzuscheiden.

Die Flexibilität der erfindungsgemäßen Vorrichtung kann durch die Möglichkeit, mehrere Ausgangsmaterialien zur Herstellung des dreidimensionalen Objekts zu verwenden, weiter verbessert sein.

Die Erfindung betrifft auch ein Verfahren zur additiven Fertigung eines dreidimensionalen Objekts aus wenigstens einem Ausgangsmaterial, wonach das Ausgangsmaterial nach Vorgabe von Druckbahnen durch eine Steuereinrichtung schichtweise aus einem Extruder oder Druckkopf, der an einem Endeffektor einer in mehreren Freiheitsgraden beweglichen Aktuatoreinrichtung befestigt ist, abgeschieden wird. Erfindungsgemäß ist vorgesehen, dass die Aktuatoreinrichtung in zumindest vier Freiheitsgraden bewegt wird, um das Ausgangsmaterial abzuscheiden, und wobei die Steuereinrichtung Bahnabstände, Ausrichtung und/oder Verlauf der abzuscheidenden Schichten auf Grundlage eines Simulationsmodells zur Vorgabe von Bauteileigenschaften des Objekts festlegt.

Die im Rahmen der Vorrichtung beschriebenen Vorteile gelten entsprechend für das Verfahren - und umgekehrt.

Erfindungsgemäß kann insbesondere die Orientierung, die Ausrichtung und/oder der Verlauf der einzelnen Druckbahnen derart bestimmt werden, dass sie aufgrund einer Topologieoptimierung optimal sind. Die Topologie des Objekts kann im Rahmen der Erfindung auch zur Verbesserung der Oberflächengüte des Objekts optimiert werden, insbesondere um die Rauheit der Oberfläche des Objekts zu verringern. Eine Topologieoptimierung kann auch im Hinblick auf den Leichtbau, die Aerodynamik und/oder Fließeigenschaften von beispielsweise Kanälen innerhalb des Bauteils erfolgen.

Ein wesentliches Problem des herkömmlichen 3D-Drucks bzw. der herkömmlichen additiven Fertigung kann erfindungsgemäß vermieden werden. Bei der herkömmlichen additiven Fertigung weisen die Verbindungsflächen der einzelnen Schichten eine deutlich geringere Festigkeit auf als die Schicht in sich. Die mechanischen Eigenschaften des Objekts können deshalb nur über die Anordnung des Objekts in dem 3D-Drucker beeinflusst werden. Erfindungsgemäß ist es hingegen möglich, Schichten als beliebige Freiformen im Raum anzuordnen. Die Druckbahnen können in beliebiger Anordnung auf modellierten Freiformflächen realisiert werden. Beispielsweise durch die nachfolgend noch beschriebene äquidistante Positionierung der Schichten können faserverstärkte Druckmaterialien mit beliebiger Orientierung erzeugt werden.

Aufgrund der erhöhten Anzahl von Freiheitsgraden bei der Beweglichkeit der Aktuatoreinrichtung können außerdem Orientierungsänderungen des Druckkopfs bzw. des Extruders gezielt genutzt werden, um Kollisionen mit dem Objekt und/oder Baugruppen der Vorrichtung zu vermeiden, wodurch auch ein Druck an schwer zugänglichen Kanten als auch ein Druck in schwierigen und beengten Bauräumen möglich sein kann.

Durch die erhöhte Anzahl von Freiheitsgraden und die damit einhergehende verbesserte Positionierbarkeit des Extruders oder Druckkopfes kann auch vorgesehen sein, das erfindungsgemäß zu fertigende Objekt schichtweise auf einem bereits bestehenden zweiten Objekt, einer bereits bestehenden Baugruppe oder einem bereits bestehenden Material aufzutragen bzw. aufzudrucken. Ein schichtweises Auftragen des Objekts auf einem existierenden Bauteil kann unter anderem im Automotivebereich, insbesondere für Kleinserien, von Vorteil sein. Auch ein "Reparaturdruck" kann hierdurch möglich sein.

Wie bereits für die Vorrichtung beschrieben, kann auch im Rahmen des Verfahrens vorgesehen sein, dass die Aktuatoreinrichtung in vier Freiheitsgraden, vorzugsweise in fünf Freiheitsgraden oder mehr Freiheitsgraden und besonders bevorzugt in sechs Freiheitsgraden, bewegt wird.

Wie ebenfalls bereits für die Vorrichtung beschrieben, kann auch im Rahmen des Verfahrens eine Wechseleinrichtung zum Auswechseln des Extruders oder Druckkopfes vorgesehen sein, um Druckbahnen aus verschiedenen Ausgangsmaterialien abzuscheiden. Es kann auch vorgesehen sein, dass der Extruder bzw. Druckkopf Druckbahnen aus verschiedenen Ausgangsmaterialien abscheidet.

In einer Weiterbildung der Erfindung kann vorgesehen sein, dass das Ausgangsmaterial derart abgeschieden wird, dass die Druckbahnen wenigstens einer Schicht der dreidimensionalen Kontur des Objekts stufenlos folgen.

Bei einem herkömmlichen 3D-Druck bzw. bei einer herkömmlichen additiven Fertigung kann der Extruder oder der sonstige Druckkopf während des Abscheidens einer Schicht lediglich in zwei Translationsfreiheitsgraden ("x-y-Richtung") bewegt werden. Im Rahmen der Erfindung ist es hingegen möglich, den Extruder bzw. Druckkopf während des Abscheidens einer Schicht außerdem in eine dritte Raumrichtung ("z-Richtung") zu bewegen und/oder entlang zumindest eines Rotationsfreiheitsgrades zu verkippen, wodurch der Extruder/Druckkopf der Kontur des herzustellenden Objekts folgen kann.

Insbesondere eine Treppenkontur bei einer Höhenänderung (in "z-Richtung") kann dadurch vermieden werden, da die abgeschiedenen Druckbahnen bzw. Fasern dem Höhenprofil bzw. z-Profil des Objekts stets folgen können.

Durch das Vermeiden einer Treppenkontur kann unter anderem die Rauheit der Oberfläche des Objekts verringert und die Oberflächengüte verbessert sein.

Es kann auch vorgesehen sein, während Druck und Strukturierung der einzelnen Schichten bzw. während dem Abscheiden der Schichten "in situ" die einzelnen Schichten und Bauteilbereiche zu analysieren, beispielsweise mittels eines Lasers. Hierdurch können u. a. Informationen zu Bauteilbereichen und Schichten innerhalb des Bauteils bereits während des Drucks gewonnen und ggf. optimiert werden.

Weitere Verbesserungen der Oberflächenqualität bzw. der Oberflächeneigenschaften können durch eine Nachbearbeitung mit einem Laserschmelzverfahren (SLS) erreicht werden. Hierzu können die generierten Druckbahnen direkt, versetzt oder ergänzt um eine oder zusätzliche Bewegungsrichtungen, verwendet werden. Dies kann z. B. eine Glättung, eine zusätzliche Vernetzung oder eine Funktionalisierung der Oberfläche bewirken.

In einer vorteilhaften Weiterbildung der Erfindung kann vorgesehen sein, dass die Druckbahnen orthogonal zu der Oberfläche des Objekts abgeschieden werden.

Die Erfinder haben erkannt, dass sich insbesondere mechanisch vorteilhafte Objekteigenschaften ergeben können, wenn die Druckbahnen orthogonal zu der Oberfläche des Objekts abgeschiedene werden. Der Extruder bzw. Druckkopf kann aufgrund der hohen Flexibilität der Aktuatoreinrichtung entsprechend verkippt werden, um der Oberfläche des Objekts in orthogonaler Ausrichtung während des Druckens bzw. Abscheidens des Ausgangsmaterials zu folgen. Bei einem herkömmlichen 3D-Druck bzw. bei einer herkömmlichen additiven Fertigung ist in der Regel ebenfalls eine orthogonale Abscheidung des Ausgangsmaterials vorgesehen, allerdings nicht orthogonal zum Verlauf der Oberfläche des Objekts, sondern orthogonal zu den bereits abgeschiedenen Schichtlche bzw. zu einer ebenen Trägerplatte, auf der das Objekt schichtweise aufgedruckt wird.

In einer Weiterbildung der Erfindung kann vorgesehen sein, dass die Schichten in äquidistanten Bahnabständen abgeschieden werden.

Der Verlauf einer Schicht kann somit einer "Äquidistanten" bezüglich einer bereits aufgetragenen, darunterliegenden Schicht, entsprechen. Äquidistanten sind Hilfslinien, die einen gleichbleibenden Abstand zu einer Kontur aufweisen.

Besonders bevorzugt können die Schichten in äquidistanten Schichten abgeschieden werden, um die mechanischen, optischen oder elektrischen Eigenschaften des Objekts, insbesondere die Robustheit des Objekts, zu verbessern. Auch die Oberflächenqualität (z. B. Rauheit sowie optische oder funktionale Aspekte) kann verbessert sein. Gleiches gilt für eine Nachbehandlung mit einem Laserschmelzverfahren (SLS).

Erfindungsgemäß ist vorgesehen, dass eine durchgängige Faser des Ausgangsmaterials abgeschieden wird, die durch zumindest zwei Schichten des Objekts verläuft.

Es kann somit eine "endlose Faser" in das zu fertigende Bauteil bzw. Objekt eingearbeitet bzw. eingedruckt werden. Hierdurch kann die Stabilität des Objekts derart erhöht werden, dass sich dieses selbst für Luftfahrtanwendungen eignen kann. Insbesondere durch das Abscheiden einer durchgängigen Faser in dem Objekt lässt sich das erfindungsgemäße Verfahren weiter verbessern. Die durchgängigen Fasern können vorteilhaft Zugbelastungen aufnehmen.

Insbesondere eine Anordnung der durchgängigen Faser in der Art eines Netzes kann sich zur Verstärkung der Stabilität des Objekts eignen.

Erfindungsgemäß kann die Faser der dreidimensionalen Kontur des Objekts folgen, wodurch die Stabilität des Objekts unabhängig von der Raumrichtung einer auf das Objekt wirkenden Kraft erhöht sein kann. Aufgrund des bei einem herkömmlichen 3D-Druck bzw. bei herkömmlicher additiver Fertigung verwendeten Schichtaufbaus können eingebettete Fasern nur Kräfte, die weitestgehend senkrecht zum Schichtverlauf wirken, aufnehmen.

Es kann auch vorgesehen sein, dass eine durchgängige Faser des Ausgangsmaterials abgeschieden wird, die durch lediglich eine Schicht des Objekts verläuft.

In einer vorteilhaften Weiterbildung der Erfindung kann vorgesehen sein, dass zumindest zwei Ausgangsmaterialien abgeschieden werden, um das Objekt als Faserverbundwerkstoff, insbesondere als Laminat, zu fertigen.

Insbesondere wenn das Ausgangsmaterial derart abgeschieden wird, dass die Druckbahnen wenigstens einer Schicht der dreidimensionalen Kontur des Objekts folgen, kann das Objekt überall stets aus derselben definierten Anzahl von Schichten bestehen. Hierdurch kann ein Verbundstoff verschiedener Materialien (beispielsweise Laminat, Damast, beschichtete Getränkekartons, etc.) hergestellt werden. Aufgrund der bei einem herkömmlichen 3D-Druck bzw. bei herkömmlicher additiver Fertigung nicht definierten Schichtanzahl ist dies in herkömmlicher Weise lediglich für sehr einfache Bauteil-Geometrien möglich. Eine komplexe dreidimensionale Geometrie aus einem durchgängigen Verbundstoff zu fertigen, ist lediglich im Rahmen der vorliegenden Erfindung möglich.

In einer vorteilhaften Weiterbildung der Erfindung kann vorgesehen sein, dass zur Vorgabe lokaler Bauteileigenschaften die Bahnabstände der abzuscheidenden Schichten von der Steuereinrichtung berücksichtigt werden.

Über die variierenden Bahnabstände können lokal unterschiedliche Materialeigenschaften erzeugt werden.

Beispielsweise kann vorgesehen sein, die Bahnabstände der Schichten innerhalb des Objekts zu variieren, um gezielte Variationen von Bauteileigenschaften innerhalb des Objekts vorzusehen.

In einer Weiterbildung der Erfindung kann vorgesehen sein, dass zur Vorgabe globaler Bauteileigenschaften die Ausrichtung der abzuscheidenden Schichten von der Steuereinrichtung berücksichtigt wird.

Über die Variation und Ausrichtung der einzelnen Schichten können globale Bauteileigenschaften erzeugt werden.

Durch die Vorgabe der Ausrichtung der Bahnrichtungen der Schichten innerhalb des Objekts (beispielsweise in x-Richtung, y-Richtung oder z-Richtung) kann im Hinblick auf die spätere Verwendung des Objekts eine globale Bauteileigenschaft vorgegeben werden. Beispielsweise kann die Stabilität gegenüber Zugbelastungen in eine gewünschte Raumrichtung verbessert werden.

Gemäß einer Weiterbildung der Erfindung kann vorgesehen sein, dass die Steuereinrichtung die Bahnabstände, die Ausrichtung und/oder den Verlauf der abzuscheidenden Schichten zur Vorgabe von Dehnungseigenschaften, einer mechanischen Festigkeit, einer Oberflächengüte, einer elektrischen Eigenschaft, insbesondere einer elektrischen Leitfähigkeit, und/oder einer optischen Eigenschaft, insbesondere einem Brechungsindex, berücksichtigt.

Durch die hohe Flexibilität des erfindungsgemäßen Verfahrens können somit neben einer Vorgabe mechanischer Bauteileigenschaften, insbesondere mechanische Festigkeit, auch weitere -je nach Anwendungsgebiet - vorteilhafte Eigenschaften des Objekts, beispielsweise elektrische oder optische Eigenschaften, vorgegeben werden.

Es kann insbesondere vorgesehen sein, die optischen Eigenschaften des zu fertigenden dreidimensionalen Objekts einzig durch Vorgabe der Bahnabstände, Ausrichtung und/oder dem Verlauf der abzuscheidenden Schichten vorzugeben, und insbesondere nicht durch Zugabe von Additiven.

Das erfindungsgemäße Verfahren ist beispielsweise zur Verwendung bei der Herstellung elektrischer Leiter auf oder innerhalb des dreidimensionalen Objekts vorteilhaft einsetzbar. Obwohl elektrische Leiter in der Regel Knicke und Kanten aufweisen dürfen, können im herkömmlichen 3D-Druck bzw. bei der herkömmlichen additiven Fertigung auftretende Kanten, Treppenstufen und insbesondere Schichtübergänge, eine Stelle mit erhöhtem Widerstand darstellen, ähnlich einer Lötstelle. Die elektrischen Eigenschaften erfindungsgemäß gedruckter oder eingedruckter elektrischer Leiter können im Vergleich dazu verbessert sein. Erfindungsgemäß gefertigte elektrische Leiter auf oder innerhalb der Objekte können damit beispielsweise für die Hochfrequenztechnik vorteilhafter einsetzbar sein. Ferner kann eine Erwärmung des Objekts bei Übertragung hoher Ströme durch die verbesserten elektrischen Eigenschaften verringert sein.

In einer vorteilhaften Weiterbildung der Erfindung kann vorgesehen sein, dass die Ausrichtung von Schichtübergängen von der Steuereinrichtung gemäß einem definierten Winkel zu einer vorgesehenen Ausbreitungsrichtung einer durch das Objekt zu übertragenden elektromagnetischen Welle bestimmt wird.

Die Erfinder haben erkannt, dass sich das erfindungsgemäße Verfahren bzw. die erfindungsgemäße Vorrichtung insbesondere zur Optimierung optischer Eigenschaften des zu fertigenden Objekts eignen kann. Durch die hohe Anzahl Freiheitsgrade bei der Ansteuerung der Aktuatoreinrichtung ist es möglich, die Schichtübergänge bei optischen Bauteilen in einem definierten Winkel zur Ausbreitungsrichtung des Lichts (oder einer sonstigen elektromagnetischen Welle) anzuordnen, wobei in der Regel eine Ausrichtung bzw. ein Winkel von 90° zur Ausbreitungsrichtung des Lichts angestrebt ist.

Im Hinblick auf eine Verwendung des Objekts als optisches Bauteil kann es von Vorteil sein, die Oberflächenqualität bzw. Oberflächengüte des Objekts erfindungsgemäß bereits derart zu verbessern, dass eine Nachbearbeitung des Objekts (z. B. ein Schleifen oder Polieren der Oberfläche) entfallen kann. Der Herstellungsaufwand kann dadurch verringert sein. Die Oberfläche des Objekts kann sich damit beispielsweise zur Transmission, Reflexion und/oder Manipulation einer elektromagnetischen Welle, insbesondere Licht, vorteilhaft eignen.

Auf diese Weise können optische Eigenschaften von gedruckten bzw. additiv gefertigten dreidimensional gefertigten Objekten deutlich verbessert werden.

Erfindungsgemäß können Lichtleiter oder sonstige Wellenleiter in Bauteile eingedruckt werden.

Insbesondere die additive Fertigung von Lichtleitern mit dem erfindungsgemäßen Verfahren bzw. mit der erfindungsgemäßen Vorrichtung kann von Vorteil sein, da ein Lichtleiter nicht geknickt werden bzw. keine Ecken aufweisen darf. Ein Drucken von Lichtleitern mit einem herkömmlichen 3D-Druck ist damit praktisch nicht möglich. Im Rahmen der Erfindung können hingegen selbst knickempfindliche Funktionalitäten in das Objekt eingearbeitet werden.

In einer vorteilhaften Weiterbildung der Erfindung kann vorgesehen sein, dass in dem Simulationsmodell eine mechanische Krafteinleitung und/oder Zug/Druckrichtung, eine Ausbreitungsrichtung einer elektromagnetischen Welle und/oder ein Stromfluss durch das Objekt berücksichtigt wird.

Erfindungsgemäß kann die Steuereinrichtung beispielsweise auf Basis einer klassischen Bauteiloptimierung, die die Geometrie vorgibt (zum Beispiel minimale Radien bei Kanten und die erforderlichen Materialdicken oder Dichten der verstärkenden Faser) die Druckbahnen auf der zu erstellenden Freiform berechnen. Die Bewegungseinheit bzw. die Aktuatoreinrichtung kann dann unter Vorgabe der Steuereinrichtung das zu fertigende dreidimensionale Objekt in mehreren, den Anforderungen angepassten Schichten mit unterschiedlichen Orientierungen mittels des Extruders (oder des sonstigen Druckkopfes) "drucken".

Das Simulationsmodell kann auf der Methode der finiten Elemente (FEM) basieren. Dieses Verfahren ist insbesondere zur Untersuchung von Festigkeits- und Verformungseigenschaften von Festkörpern grundsätzlich bekannt und vorteilhaft.

Die gewünschten Objekteigenschaften können dem Simulationsmodell als Zielvorgabe bzw. Zielfunktion vorgegeben werden. Zur Bestimmung der Bahnabstände, Ausrichtung und/oder des Verlaufs der abzuscheidenden Schichten kann die Steuereinrichtung beispielsweise ein beliebiges Optimierungsverfahren zum Erreichen der Zielfunktion bzw. der gewünschten Bauteileigenschaften durchführen, beispielsweise ein Verfahren zum maschinellen Lernen.

Es kann auch vorgesehen sein, dass die Steuereinrichtung eingerichtet ist, Ausgangsdaten für ein Simulationsprogramm zu erzeugen, insbesondere für ein auf Grundlage der Finite-Elemente-Methode arbeitendes Simulationsprogramm, um diverse Eigenschaften des hergestellten dreidimensionalen Objekts im Anschluss an dessen Fertigung zu berechnen.

Im Anschluss an die additive Fertigung des dreidimensionalen Objekts kann im Rahmen der Erfindung optional eine Nachbearbeitungseinheit vorgesehen sein, beispielsweise ein Fräser, ein Polierwerkzeug oder ein Laser zur Nachbearbeitung mit gleichen oder anderen Bahnen auf der Freiform.

Im Rahmen der erfindungsgemäßen Vorrichtung bzw. des erfindungsgemäßen Verfahrens kann vorgesehen sein, dass das zu fertigende dreidimensionale Objekt auf eine Stützstruktur, beispielsweise eine zuvor ebenfalls gedruckte Stützstruktur, aufgedruckt wird. Die Stützstruktur kann ggf. nach einem herkömmlichen 3D-Druckverfahren gefertigt werden, um den Aufwand zu verringern. Es kann auch eine Aluminium- oder eine sonstige Stützstruktur vorgesehen sein. Auf die Stützstruktur kommt es im Rahmen der Erfindung nicht unbedingt an.

Es kann vorgesehen sein, zwischen der Stützstruktur und dem zu fertigenden dreidimensionalen Objekt eine Zwischenschicht zu drucken, beispielsweise eine spezielle "Ablöseschicht", um das Ablösen des Objekts von der Stützstruktur zu verbessern.

Es kann vorgesehen sein, die Trägerplatte, auf der das dreidimensionale Objekt und/oder die Stützstruktur aufgedruckt wird, zu beheizen, insbesondere um das Objekt anschließend leichter von der Trägerplatte und/oder von der Stützstruktur entfernen zu können.

Es kann vorgesehen sein, die Vorschubrichtung des Extruders oder Druckkopfes während des Druckens zu regeln. Beispielsweise kann vorgesehen sein, an Radienübergängen bzw. an Druckpositionen, an denen der Extruder bzw. Druckkopf seinen Kippwinkel verändern muss, langsamer und bei geraden Flächen schneller zu drucken.

Es kann auch vorgesehen sein, den Materialdurchsatz während des Druckens zu regeln.

Im Unterschied zu einer herkömmlichen additiven Fertigung kann statt einer zweidimensionalen Bahngenerierung im Rahmen des erfindungsgemäßen Verfahrens durch die Steuereinrichtung eine dreidimensionale Bahngenerierung für die Druckbahnen vorgesehen sein.

Im Unterschied zur herkömmlichen Bahngenerierung wird bei der dreidimensionalen Bahngenerierung kein Parameter als Funktion der beiden anderen betrachtet. Somit können einer bestimmten Kombination von x- und y-Koordinaten mehrere z-Werte zugeordnet werden, und es kann praktisch auf jede beliebige Geometrie eine Werkzeugbahn gelegt werden. Hierfür kann eine durchgehend definierte Oberfläche, beispielsweise in Form eines beliebigen zusammenhängenden Dreiecksnetzes, als Grundlage dienen.

Die erfindungsgemäße, dreidimensionale Oberflächentransformation kann wie nachfolgend beschrieben von der Steuereinrichtung berechnet werden.

Ausgangspunkt kann eine zuvor mithilfe der Bahngenerierung erzeugte zweidimensionale Werkzeugbahn in Form einer Punkteliste und eine durchgehend definierte dreidimensionale Oberfläche in Form einer Dreiecksliste sein. Das Koordinatensystem der Dreiecksliste legt das Raum-Koordinatensystem fest. Die Oberflächentransformation kann sich somit an dem beim Erstellen der Oberfläche gewählten Koordinatenursprung $P_0$ orientieren.

Der Startpunkt $P_s$ kann vom Anwender als Parameter angegeben werden. Hierbei handelt es sich in der Regel jedoch nicht um einen beliebig wählbaren Punkt. Als Startpunkt $P_s$ wird in der Regel ein Eckpunkt eines Dreiecks im Dreiecksnetz der Oberfläche gewählt. Dieser gewählte Startpunkt dient als Bezugspunkt auf der dreidimensionalen Oberfläche. Der Nullpunkt der Werkzeugbahn liegt nach der Oberflächentransformation auf dem vom Anwender ausgewählten Startpunkt $P_s$ und die Werkzeugbahn kann ausgehend von diesem Punkt auf die Oberfläche gelegt werden.

In einem ersten Schritt kann zunächst auf Basis des Bezugspunktes $P_s$ eine Bezugsebene im dreidimensionalen Raum definiert werden, anhand derer sich die Oberflächentransformation orientiert. Hierzu können zunächst alle $n_{max}$ Dreiecke im Dreiecksnetz ermittelt werden, die den Startpunkt $P_s$ als Eckpunkt enthalten, wobei deren Normalenvektoren $\overrightarrow{N_n}$ addiert und anschließend normiert werden. Somit kann der Normalenvektor der Bezugsebene $\overrightarrow{N_E}$ wie folgt gebildet werden:

$$\overrightarrow{N_E} = \sum_{n=1}^{n_{max}} \overrightarrow{N_n} \; ;$$

$$\overrightarrow{N_E} = \frac{\overrightarrow{N_s}}{\sqrt{X_{\overrightarrow{N_s}}^2 + Y_{\overrightarrow{N_s}}^2 + Z_{\overrightarrow{N_s}}^2}} \; .$$

An dieser Stelle kann die Bezugsebene E aus dem Startpunkt $P_s$ und dem Normalenvektor $\overrightarrow{N_s}$ gebildet und ihr Drehpunkt $P_{turn}$ bestimmt werden. Der Drehpunkt $P_{turn}$ der Ebene E entspricht ihrem Schnittpunkt mit einer Geraden die durch den Koordinatenursprung $P_0$ verläuft und als Richtungsvektor den Normalenvektor $\overrightarrow{N_E}$ der Ebene E besitzt:

$$E: \overrightarrow{N_E} * \begin{pmatrix} X - X_{P_s} \\ Y - Y_{P_s} \\ Z - Z_{P_s} \end{pmatrix} = 0 \; ;$$

$$P_{turn} = P_0 + \frac{\overrightarrow{N_E} * P_S}{\overrightarrow{N_E} * \overrightarrow{N_E}} \overrightarrow{N_E} \ .$$

Anschließend kann auf dieselbe Weise ein Referenzpunkt $P_{ref}$ gebildet werden. Der Referenzpunkt $P_{ref}$ sollte in der Regel nicht dem Drehpunkt $P_{turn}$ entsprechen. Der Vektor zwischen dem Drehpunkt $P_{turn}$ und dem Referenzpunkt $P_{ref}$ legt schließlich die x- und y-Achse der Bezugsebene E fest. Zur Berechnung des Punktes $P_{ref}$ kann eine Gerade verwendet werden, deren Ortsvektor $\vec{v}$ weder eine y- noch eine z-Verschiebung beinhaltet. Der Ortsvektor $\vec{v}$ beinhaltet in der Regel lediglich eine x-Verschiebung entlang der durch $P_0$ verlaufenden x-Achse des Raums. Dadurch verlaufen die Koordinatenachsen der Bezugsebene E parallel zu den Koordinatenachsen des Raums. Somit entspricht die xy-Ausrichtung der späteren dreidimensionalen Werkzeugbahn der ursprünglichen zweidimensionalen Werkzeugbahn:

$$P_{ref} = \vec{v} + \frac{\overrightarrow{N_E} * (P_S - \vec{v})}{\overrightarrow{N_E} * \overrightarrow{N_E}} \overrightarrow{N_E} \ .$$

Sollte der der Normalenvektor $\overrightarrow{N_E}$ der x-Achse des Raums entsprechen, entspricht der Referenzpunkt $P_{ref}$ dem Drehpunkt $P_{turn}$. In diesem Fall ist es von Vorteil, einen Ortsvektor $\vec{v}$ zur Berechnung der Ebene E zu verwenden, der lediglich eine y-Verschiebung entlang der y-Achse des Raums beinhaltet. Auf diese Weise bleibt in jedem Fall eine einheitliche Orientierung am Koordinatenursprung des Raums gewährleistet.

Im nächsten Schritt können für jeden Punkt *i* der Werkzeugbahn der Winkel zur x-Achse $\varphi_i$ und der Abstand zum Ursprung $R_i$ berechnet werden. Die Punkteliste wird somit erneut in Polarkoordinaten transferiert. Zur Berechnung des Winkels $\varphi_i$ wird statt der gewöhnlichen Arkustangensfunktion wieder die bereits beschriebene Atan2-Funktion verwendet:

$$\varphi_i = tan^{-1}(Y_i, X_i) \ ;$$

$$R_i = \sqrt{X_i^2 + Y_i^2} \ .$$

Anschließend können für alle $j_{max}$ Dreiecke $ABC_j$ der Dreiecksliste die drei Vektoren $\overrightarrow{AB_j}$, $\overrightarrow{AC_J}$ und $\overrightarrow{BC_J}$ zwischen den jeweiligen Eckpunkten und die Längen dieser Vektoren $l_{\overrightarrow{AB_j}}$, $l_{\overrightarrow{AC_J}}$ und $l_{\overrightarrow{BC_J}}$ berechnet werden:

$$\overrightarrow{AB_j} = B_j - A_j \ ; \quad l_{\overrightarrow{AB_j}} = \sqrt{X_{\overrightarrow{AB_j}}^2 + Y_{\overrightarrow{AB_j}}^2 + Z_{\overrightarrow{AB_j}}^2} \ ,$$

$$\overrightarrow{AC_J} = C_j - A_j \ ; \quad l_{\overrightarrow{AC_J}} = \sqrt{X_{\overrightarrow{AC_J}}^2 + Y_{\overrightarrow{AC_J}}^2 + Z_{\overrightarrow{AC_J}}^2}$$

und

$$\overrightarrow{BC_J} = C_j - B_j \ ; \quad l_{\overrightarrow{BC_J}} = \sqrt{X_{\overrightarrow{BC_J}}^2 + Y_{\overrightarrow{BC_J}}^2 + Z_{\overrightarrow{BC_J}}^2} \ .$$

Daraufhin können für jedes Dreieck $ABC_j$ drei Geraden $g_{\overrightarrow{AB_j}}$, $g_{\overrightarrow{AC_J}}$ und $g_{\overrightarrow{BC_J}}$ definiert werden. Es ist von Vorteil, wenn jede Gerade als Startpunkt einen Eckpunkt des Dreiecks und einen Richtungsvektor in Richtung des nächsten Eckpunkts besitzt:

$$g_{\overrightarrow{AB_j}} : \vec{r} = A_j + \alpha * \overrightarrow{AB_j} \ ,$$

$$g_{\overrightarrow{AC_j}}: \vec{r} = A_j + \alpha * \overrightarrow{AC_j}$$

und

$$g_{\overrightarrow{BC_j}}: \vec{r} = B_j + \alpha * \overrightarrow{BC_j} \; .$$

An dieser Stelle des Verfahrens kann die eigentliche Oberflächentransformation beginnen, die vorzugsweise für jeden Punkt i der Werkzeugbahn wiederholt wird.

Zunächst kann eine Rotationsmatrix $M_{rot}$ gebildet werden. $M_{rot}$ rotiert den Punkt $P_{ref}$ in rechtsdrehender Richtung um den Normalenvektor $\overrightarrow{N_E}$ der Ebene E. Der Winkel, um den rotiert wird, entspricht dem Winkel $\varphi_i$ des zu transformierenden Punktes i der Werkzeugbahn zur x-Achse:

$$M_{rot} =$$

$$\begin{bmatrix} X_{\overrightarrow{N_E}}^2 * t + c & X_{\overrightarrow{N_E}} * Y_{\overrightarrow{N_E}} * t + h * Z_{\overrightarrow{N_E}} & X_{\overrightarrow{N_E}} * Z_{\overrightarrow{N_E}} * t + h * Y_{\overrightarrow{N_E}} \\ X_{\overrightarrow{N_E}} * Y_{\overrightarrow{N_E}} * t + h * Z_{\overrightarrow{N_E}} & Y_{\overrightarrow{N_E}}^2 * t + c & Y_{\overrightarrow{N_E}} * Z_{\overrightarrow{N_E}} * t + h * X_{\overrightarrow{N_E}} \\ X_{\overrightarrow{N_E}} * Z_{\overrightarrow{N_E}} * t + h * Y_{\overrightarrow{N_E}} & Y_{\overrightarrow{N_E}} * Z_{\overrightarrow{N_E}} * t + h * X_{\overrightarrow{N_E}} & Z_{\overrightarrow{N_E}}^2 * t + c \end{bmatrix}$$

*mit: t* = 1 - *cos* $\varphi_i$ ; *c* = cos $\varphi_i$ ; *h* = sin $\varphi_i$.

Wird der Punkt $P_{ref}$ mit der Rotationsmatrix $M_{rot}$ multipliziert, entsteht somit der Punkt $P_{rot}$ und es kann der Vektor $\overrightarrow{V_{rot}}$ zwischen dem Punkt $P_{rot}$ und dem Drehpunkt $P_{turn}$ berechnet werden:

$$P_{rot} = M_{rot} * P_{ref} \; ;$$

$$\overrightarrow{V_{rot}} = P_{rot} - P_{turn} \; .$$

Nun kann aus dem Kreuzprodukt des Vektors $\overrightarrow{V_{rot}}$ und dem Normalenvektor $\overrightarrow{N_E}$, der Normalenvektor $\overrightarrow{N_S}$ der Schnittebene S berechnet und somit die Schnittebene S aus dem Startpunkt $P_s$ Normalenvektor $\overrightarrow{N_S}$ gebildet werden:

$$\overrightarrow{N_S} = \overrightarrow{N_E} \times \overrightarrow{V_{rot}} \; ;$$

$$S: \overrightarrow{N_S} * \begin{pmatrix} X - X_{P_s} \\ Y - Y_{P_s} \\ Z - Z_{P_s} \end{pmatrix} = 0 \; .$$

Die Schnittebene S steht somit senkrecht auf der Bezugsebene E und besitzt relativ zur x-Achse des Raums denselben Winkel $\varphi_i$ ,wie der zu transformierende Punkt i relativ zur x-Achse im zweidimensionalen. Dementsprechend besitzen sämtliche Dreiecke j, entlang derer der Punkt i der Werkzeugbahn auf die Oberfläche gelegt werden muss, zwei Schnittpunkte $P_{cut_k}$ mit der Schnittebene S. Um herauszufinden, welche dies sind, können alle *k* Schnittpunkte $P_{cut_k}$ aller Geraden $g_{\overrightarrow{ABJ}}, g_{\overrightarrow{ACJ}}$ und $g_{\overrightarrow{BCJ}}$ mit der Schnittebene S berechnet werden:

$$P_{cut_{k1}} = A_j + \frac{\overrightarrow{N_S} * (P_s - A_j)}{\overrightarrow{N_S} * \overrightarrow{AB_j}} \overrightarrow{AB_j} \; ,$$

$$P_{cut_{k2}} = A_j + \frac{\overrightarrow{N_S} * (P_s - A_j)}{\overrightarrow{N_S} * \overrightarrow{AC_j}} \overrightarrow{AC_j}$$

und

$$P_{cut_{k3}} = B_j + \frac{\overrightarrow{N_S} * (P_s - B_j)}{\overrightarrow{N_S} * \overrightarrow{BC_j}} \, \overrightarrow{BC_J} \, .$$

Anschließend können alle Schnittpunkte $k$ auf ein zweites Kriterium hin überprüft werden. Die Abstände $l_1$ und $l_2$ zwischen dem Schnittpunkt $P_{cut_k}$ und den beiden auf der jeweiligen Gerade liegenden Eckpunkten des Dreiecks $ABC_j$ müssen zusammenaddiert der jeweiligen Länge $l_{\overrightarrow{ABj}}$, $l_{\overrightarrow{ACj}}$ oder $l_{\overrightarrow{BCJ}}$ des Dreiecks entsprechen. Ist dies der Fall, schneiden sich das jeweilige Dreieck $ABC_j$ und die Schnittebene S. Das Dreieck wird der Liste der Schnittdreiecke $ABC_{cut_m}$ hinzugefügt und ihm seine beiden jeweiligen Schnittpunkte $P_{cut_{m1}}$ und $P_{cut_{m2}}$ zugeordnet.

Nachdem alle m Schnittdreiecke $ABC_{cut_m}$ bestimmt und deren zwei jeweilige Schnittpunkte $P_{cut_{m1}}$ und $P_{cut_{m2}}$ zugeordnet sind, sollte die Liste vorzugsweise zunächst auf Dreiecke überprüft werden, die zweimal denselben Schnittpunkt $P_{cut_{m1}} = P_{cut_{m2}}$ mit der Schnittebene S besitzen. Dieser Fall kann auftreten, wenn die Schnittebene S genau durch einen Eckpunkt verläuft, in dem sich drei oder mehr Dreiecke treffen. In diesem Fall werden nur zwei Dreiecke wirklich geschnitten. Sämtliche anderen Dreiecke werden lediglich in einem Eckpunkt berührt und sind durch ihren doppelten Schnittpunkt $P_{cut_{m1}} = P_{cut_{m2}}$ zu erkennen. Dreiecke dieser Art können aus der Schnittdreiecksliste entfernt werden.

Im Anschluss können die beiden Dreiecke $ABC_{cut_m}$ ermittelt werden, die den Startpunkt $P_S$ als Schnittpunkt $P_{cut_{m1}}$ oder $P_{cut_{m2}}$ enthalten. Daraufhin können die beiden Schnittvektoren $\overrightarrow{cut_m}$ der beiden Dreiecke $ABC_{cut_m}$, berechnet werden. $\overrightarrow{cut_m}$ ist der Vektor ausgehend vom ersten Schnittpunkt $P_{cut_{m1}}$ hin zum zweiten Schnittpunkt $P_{cut_{m2}}$ des Schnittdreiecks $ABC_{cut_m}$ oder umgekehrt. Der erste Vektor $\overrightarrow{cut_m}$ zeigt immer vom Startpunkt $P_s$ hin zum zweiten Schnittpunkt des Dreiecks:

$$\overrightarrow{cut_m} = P_{cut_{m2}} - P_{cut_{m1}} \, .$$

Einer der beiden Schnittvektoren $\overrightarrow{cut_m}$ zeigt in die gewünschte Richtung des zu transformierenden Punktes $i$ der Werkzeugbahn. Der andere Schnittvektor $\overrightarrow{cut_m}$ zeigt in die entgegengesetzte Richtung. Um herauszufinden, welcher der beiden Vektoren in die gewünschte Richtung zeigt, werden beide zunächst normiert. Daraufhin kann das Kreuzprodukt aus dem jeweiligen Schnittvektor $\overrightarrow{cut_m}$ und dem Normalenvektor $\overrightarrow{N_E}$ der Ebene E gebildet und der Normalenvektor $\overrightarrow{N_S}$ der Schnittebne $S$ davon subtrahiert werden. Somit entsteht der Differenzvektor $\overrightarrow{v_{diff}}$ und es kann seine Länge $l_{\overrightarrow{vdiff}}$ berechnet werden:

$$\overrightarrow{v_{diff}} = \left( \overrightarrow{cut_m} \times \overrightarrow{N_E} \right) - \overrightarrow{N_S} \, ;$$

$$l_{\overrightarrow{v_{diff}}} = \sqrt{X_{\overrightarrow{v_{diff}}}{}^2 + Y_{\overrightarrow{v_{diff}}}{}^2 + Z_{\overrightarrow{v_{diff}}}{}^2} \, .$$

Ist die Länge $l_{\overrightarrow{vdiff}}$ größer Null, zeigt der entsprechende Schnittvektor $\overrightarrow{cut_m}$ in die entgegengesetzte Richtung. Ist die Länge $l_{\overrightarrow{vdiff}}$ gleich Null, zeigt der entsprechende Schnittvektor $\overrightarrow{cut_m}$ in die gewünschte Richtung. Somit ist der erste Vektor $\overrightarrow{cut_m}$, in dessen Richtung der zu transformierende Punkt bewegt werden soll, ermittelt. Der Vektor wird einer neuen Liste von u zur Oberflächentransformation verwendeten Schnittvektoren $\overrightarrow{cut_u}$ hinzugefügt. Anschließend sollte für den Vektor $\overrightarrow{cut_u}$ dessen Länge $l_{\overrightarrow{cutu}}$ vor der Normierung berechnet werden:

$$l_{\overrightarrow{cut_u}} = \sqrt{X_{\overrightarrow{cut_u}}{}^2 + Y_{\overrightarrow{cut_u}}{}^2 + Z_{\overrightarrow{cut_u}}{}^2} \, .$$

An dieser Stelle wird überprüft, ob die Summe aller bisherigen Längen $l_{\overrightarrow{cutu}}$ bereits den zu Anfang berechneten Abstand $R_i$ des Punktes $P_i$ zum Ursprung übersteigt:

$$R_i < \sum_{u=1}^{u_{max}} l_{\overrightarrow{cut_u}} \; .$$

Falls dies nicht der Fall ist, kann das nächste Dreieck $ABC_{cut_m}$ ermittelt werden. Das nächste Dreieck kann dadurch bestimmt werden, dass es ebenfalls den zweiten Schnittpunkt $P_{cut_{m2}}$ des letzten Dreiecks $ABC_{cut_m}$ enthält. Der Schnittvektor $\overrightarrow{cut_m}$ des letzten Schnittdreiecks $ABC_{cut_m}$ endet genau an diesem zweiten Schnittpunkt $P_{cut_{m2}}$. Somit kann der nächste Vektor $\overrightarrow{cut_m}$ des nächsten Dreiecks berechnet werden. $\overrightarrow{cut_m}$ ist der Vektor ausgehend vom ersten Schnittpunkt $P_{cut_{m1}}$ hin zum zweiten Schnittpunkt $P_{cut_{m2}}$ des Schnittdreiecks $ABC_{cut_m}$ oder umgekehrt. Der Vektor $\overrightarrow{cut_m}$ zeigt immer vom zweiten Schnittpunkt des letzten Dreiecks hin zum neuen Schnittpunkt. Der Vektor wird wieder der Liste von $u$ zur Oberflächentransformation verwendeten Schnittvektoren $\overrightarrow{cut_u}$ hinzugefügt. Anschließend kann erneut überprüft werden, ob die Summe aller bisherigen Längen $l_{\overrightarrow{cut_u}}$ bereits den zu Anfang berechneten Abstand $R_i$ des Punktes $P_i$ zum Ursprung übersteigt.

Dieses Prinzip kann fortgesetzt werden, bis die Summe aller bisherigen Längen $l_{\overrightarrow{cut_u}}$ den zu Anfang berechneten Abstand $R_i$ des Punktes $P_i$ zum Ursprung übersteigt oder kein nächstes Dreieck $ABC_{cut_m}$ mehr gefunden werden kann.

Im ersten Fall kann zunächst berechnet werden, um welche Länge $l_{ov}$ der Abstand $R_i$ überschritten wurde. Anschließend kann die Länge $l_{rest}$ berechnet werden, die der letzte Vektor $\overrightarrow{cut_{u_{max}}}$ besitzen müsste, damit die Summe aller bisherigen Längen $l_{\overrightarrow{cut_u}}$ dem Abstand $R_i$ entspricht:

$$l_{ov} = \left( \sum_{u=1}^{u_{max}} l_{\overrightarrow{cut_u}} \right) - R_i \; ;$$

$$l_{rest} = l_{\overrightarrow{cut_{u_{max}}}} - l_{ov} \; .$$

Daraufhin kann der letzte Vektor $\overrightarrow{cut_u}$ normiert und mit $l_{rest}$ multipliziert werden. Somit entspricht die Summe aller Längen der Schnittvektoren dem Abstand $R_i$ des zu transformierenden Punktes $i$. Der Punkt $i$ wurde somit erfolgreich auf die Oberfläche transformiert. Die Koordinaten des transformierten Punktes $P_{trans_i}$ entsprechen der Summe aller $u_{max}$ benötigter Schnittvektoren $\overrightarrow{cut_u}$:

$$P_{trans_i} = \sum_{u=1}^{u_{max}} \overrightarrow{cut_u} \; .$$

Sollte der zweite Fall eintreten und es kann kein nächstes Dreieck $ABC_{cut_m}$ mehr gefunden werden, bedeutet dies, die Oberfläche ist zu klein, um den gewünschten Punkt $P_i$ zu transformieren. Der entsprechende Punkt $P_{trans_i}$ erhält die Koordinaten des letzten ermittelbaren Schnittpunktes $P_{cut_{m2}}$ und liegt somit genau auf dem äußeren Rand der Oberfläche.

Der beschriebene Verfahrensablauf wird für jeden Punkt $P_i$ der Punkteliste wiederholt. Auf diese Weise kann von der Steuereinrichtung eine äquidistante Oberflächentransformation für jede beliebige dreidimensionale Oberflächen berechnet werden. Diese Form der äquidistanten Oberflächentransformation funktioniert insbesondere für jede beliebige in Form einer Dreiecksliste durchgehend definierte Oberfläche. Hinsichtlich der Geometrie der Oberfläche existieren keinerlei Einschränkungen.

Vorzugsweise kann der im Vergleich mit einer herkömmlichen, zweieinhalbdimensionalen Oberflächentransformation erhöhte Rechenaufwand der vorliegend beschriebenen, dreidimensionalen Oberflächentransformation bei Auslegung der Steuereinrichtung berücksichtigt werden. Insbesondere kann eine entsprechende Rechenleistung bzw. Rechenkapazität, beispielsweise hinsichtlich Arbeitsspeicher, Prozessorleistung und/oder Rechenarchitektur (z. B. 16-Bit, 32-Bit, 64-Bit), für die Steuereinrichtung bereitgestellt werden, um die Punkteliste mit ausreichend hoher Geschwindigkeit und Genauigkeit zu transformieren. Beispielsweise kann als Grundlage für die Steuereinrichtung neben einer herkömmlichen CPU-basierten Architektur auch eine GPU (Grafikprozessor) - basierte Architektur vorgesehen sein, wodurch beispielsweise eine hohe Parallelisierung von Prozessen bzw. Verfahrensschritten erreicht werden kann.

Die Erfindung betrifft auch ein Computerprogrammprodukt mit Programmcodemitteln, um ein Verfahren gemäß den vorstehenden und nachfolgenden Ausführungen durchzuführen, wenn das Programm auf einer Steuereinrichtung einer Vorrichtung zur additiven Fertigung eines dreidimensionalen Objekts ausgeführt wird.

Die Steuereinrichtung kann als Mikroprozessor ausgebildet sein. Anstelle eines Mikroprozessors kann auch eine beliebige weitere Einrichtung zur Implementierung der Steuereinrichtung vorgesehen sein, beispielsweise eine oder mehrere Anordnungen diskreter elektrischer Bauteile auf einer Leiterplatte, eine speicherprogrammierbare Steuerung (SPS), eine anwendungsspezifische integrierte Schaltung (ASIC) oder eine sonstige programmierbare Schaltung, beispielsweise auch ein Field Programmable Gate Array (FPGA), eine programmierbare logische Anordnung (PLA) und/oder ein handelsüblicher Computer.

Es kann eine integrierte Hard- und Softwareplattform für eine additive Fertigung in sechs Freiheitsgraden ("6D-Druck") vorgesehen sein, wodurch hinsichtlich deren Eigenschaften optimierte, dreidimensionale Objekte hergestellt werden können. Hierdurch können die Beschränkungen eines dreidimensionalen Aufbaus bei der additiven Fertigung, aus denen beispielsweise die genannte Stufenbildung resultieren, vermieden werden. Hierdurch können insbesondere die mechanischen Eigenschaften des Objekts und die Oberflächengüte des Objekts verbessert sein.

Die Erfindung betrifft auch eine Verwendung einer Vorrichtung gemäß den vorstehenden und nachfolgenden Ausführungen (oder die Verwendung eines Verfahrens gemäß den vorstehenden und nachfolgenden Ausführungen) zur additiven Fertigung eines Faserverbundwerkstoffs, eines Wellenleiters, eines Lichtwellenleiters, eines elektrischen Leiters oder eines Leichtbauteils.

Vorteilhaft sind topologieoptimierte, additiv gefertigte Objekte herstellbar, deren Eigenschaften lokal und global an die Nutzungsanforderungen angepasst sind, analog der Faserausrichtung bei Faserverbundwerkstoffen gemäß den Bauteilanforderungen (Krafteinleitung, Zugeinrichtung, etc.).

Die optimierten Bauteileigenschaften können neben mechanischer Natur auch elektrischer Natur (zum Beispiel Leitfähigkeit) oder optischer Natur (zum Beispiel Brechungsindex) sein. Es können auch weitere Materialeigenschaften optimiert werden, die sich durch Orientierung der Druckbahnen und Dichtevariationen realisieren lassen, beispielsweise die Oberflächengüte bzw. die Rauheit der Oberfläche des Objekts. Gleiches gilt für eine Nachbehandlung mit einem Laserschmelzverfahren (SLS).

Beispielsweise können in Leichtbauteilen nachträglich zusätzliche Streben zur Erhöhung der Stabilität eingesetzt werden, vergleichbar mit einem Fachwerk. Zusätzliche Streben mit einer aus einer herkömmlichen additiven Fertigung resultierenden Stufenstruktur beeinflussen das Verhältnis von Stabilität zu Gewicht bei dieser Anwendung allerdings eher negativ, da mit dem zusätzlichen Material nur wenig zusätzliche Stabilität hinzugefügt werden kann. Durch die erfindungsgemäße Vorrichtung bzw. das erfindungsgemäße Verfahren kann die Stabilität bestehender Leichtbaukonstruktionen allerdings deutlich erhöht werden, ohne das Verhältnis von Stabilität und Gewicht zu verschlechtern. Insbesondere die Verwendung einer durchgängigen Faser durch die zusätzliche Strebe kann hierbei von Vorteil sein.

Die erfindungsgemäße Vorrichtung bzw. das erfindungsgemäße Verfahren können vorteilhaft zur Beeinflussung optischer Eigenschaften des zu fertigenden dreidimensionalen Objekts ohne Zugabe von zusätzlichen Additiven vorteilhaft verwendbar sein.

Erfindungsgemäß kann insbesondere die Festigkeit des dreidimensionalen Objekts verbessert sein, da das Objekt in der Regel aus einer einheitlichen Anzahl gedruckter Schichten besteht und insbesondere keine "Treppenstruktur" und damit auch keine Bruchkanten aufweist.

Merkmale, die im Zusammenhang mit der erfindungsgemäßen Vorrichtung beschrieben wurden, sind selbstverständlich auch für das Verfahren vorteilhaft umsetzbar - und umgekehrt. Ferner können Vorteile, die bereits im Zusammenhang mit der erfindungsgemäßen Vorrichtung genannt wurden, auch auf das Verfahren bezogen verstanden werden - und umgekehrt.

Beispielsweise kann im Rahmen der erfindungsgemäßen Vorrichtung vorgesehen sein, dass die Steuereinrichtung eingerichtet ist, dass das Ausgangsmaterial gemäß Vorgabe der Steuereinrichtung derart abgeschieden werden kann, dass die Druckbahnen wenigstens einer Schicht der dreidimensionalen Kontur des Objekts stufenlos folgen.

Beispielsweise kann im Rahmen der erfindungsgemäßen Vorrichtung auch vorgesehen sein, dass die Steuereinrichtung eingerichtet ist, dass die Druckbahnen orthogonal zu der Oberfläche des Objekts abgeschieden werden können.

Im Rahmen der erfindungsgemäßen Vorrichtung kann beispielsweise auch vorgesehen sein, dass die Steuereinrichtung eingerichtet ist, dass die Schichten in äquidistanten Bahnabständen abgeschieden werden können.

Im Rahmen der erfindungsgemäßen Vorrichtung ist außerdem vorgesehen, dass die Steuereinrichtung eingerichtet ist, dass eine durchgängige Faser des Ausgangsmaterials abgeschieden werden kann, die durch zumindest zwei Schichten des Objekts verläuft.

Beispielsweise kann die erfindungsgemäße Vorrichtung auch ausgebildet sein, dass zumindest zwei Ausgangsmaterialien abgeschieden werden, um das Objekt als Faserverbundwerkstoff, insbesondere als Laminat, zu fertigen.

Im Rahmen der erfindungsgemäßen Vorrichtung kann beispielsweise auch vorgesehen sein, dass die Steuereinrichtung eingerichtet ist, um zur Vorgabe lokaler Bauteileigenschaften die Bahnabstände der abzuscheidenden Schichten von der Steuereinrichtung zu berücksichtigen.

Im Rahmen der erfindungsgemäßen Vorrichtung kann beispielsweise außerdem vorgesehen sein, dass die Steuereinrichtung eingerichtet ist, um zur Vorgabe globaler Bauteileigenschaften die Ausrichtung der abzuscheidenden Schichten von der Steuereinrichtung zu berücksichtigen.

Beispielsweise kann im Rahmen der erfindungsgemäßen Vorrichtung außerdem vorgesehen sein, dass die Steuereinrichtung eingerichtet ist, um die Bahnabstände, die Ausrichtung und/oder den Verlauf der abzuscheidenden Schichten zur Vorgabe von Dehnungseigenschaften, einer mechanischen Festigkeit, einer Oberflächengüte, einer elektrischen Eigenschaft, insbesondere einer elektrischen Leitfähigkeit, und/oder einer optischen Eigenschaft, insbesondere einem Brechungsindex, zu berücksichtigen.

Beispielsweise kann im Rahmen der erfindungsgemäßen Vorrichtung ferner vorgesehen sein, dass die Steuereinrichtung eingerichtet ist, um die Ausrichtung von Schichtübergängen gemäß einem definierten Winkel zu einer vorgesehenen Ausbreitungsrichtung einer durch das Objekt zu übertragenden elektromagnetischen Welle von der Steuereinrichtung zu bestimmen.

Beispielsweise kann im Rahmen der erfindungsgemäßen Vorrichtung außerdem vorgesehen sein, dass das Simulationsmodell eine mechanische Krafteinleitung und/oder Zug/Druckrichtung, eine Ausbreitungsrichtung einer elektromagnetischen Welle und/oder ein Stromfluss durch das Objekt berücksichtigt.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen im Rahmen der Erfindung als abgeschlossen betrachtet werden, beispielsweise jeweils für jeden Patentanspruch betrachtet. Die Erfindung kann beispielswiese ausschließlich aus den in Patentanspruch 1 genannten Merkmalen bestehen.

Ferner sei betont, dass die vorliegend beschriebenen Werte und Parameter Abweichungen oder Schwankungen von $\pm 10\%$ oder weniger, vorzugsweise $\pm 5\%$ oder weniger, weiter bevorzugt $\pm 1\%$ oder weniger, und ganz besonders bevorzugt $\pm 0,1\%$ oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Nachfolgend werden Ausführungsbeispiele der Erfindung anhand der Zeichnung näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:

Figur 1    ein additiv gefertigtes dreidimensionales Objekt mit einer Stützstruktur gemäß dem Stand der Technik in einer Seitenansicht;

Figur 2    eine erfindungsgemäße Vorrichtung zur additiven Fertigung eines dreidimensionalen Objekts und ein erfindungsgemäß additiv gefertigtes dreidimensionales Objekt in einer Seitenansicht;

Figur 3    beispielhafte Ausrichtungen und Bahnabstände zweier Schichten eines erfindungsgemäß gefertigten Objekts in einer Draufsicht;

Figur 4    eine durchgängige Faser des Ausgangsmaterials, die durch zumindest zwei Schichten des Objekts verläuft, in einer Draufsicht;

Figur 5    ein Beispiel für ein erfindungsgemäß gefertigtes Objekt mit einem eingebetteten Wellenleiter in einer Schnittdarstellung;

Figur 6    beispielhafte Biegetests zur Verdeutlichung der erfindungsgemäßen Vorteile;

Figur 7    ein erfindungsgemäßes Verfahren zur additiven Fertigung des dreidimensionalen Objekts; und

Figur 8    einen beispielhaften Verfahrensablauf im Rahmen eines Computerprogrammprodukts zur Ausführung auf einer Steuereinrichtung einer erfindungsgemäßen Vorrichtung.

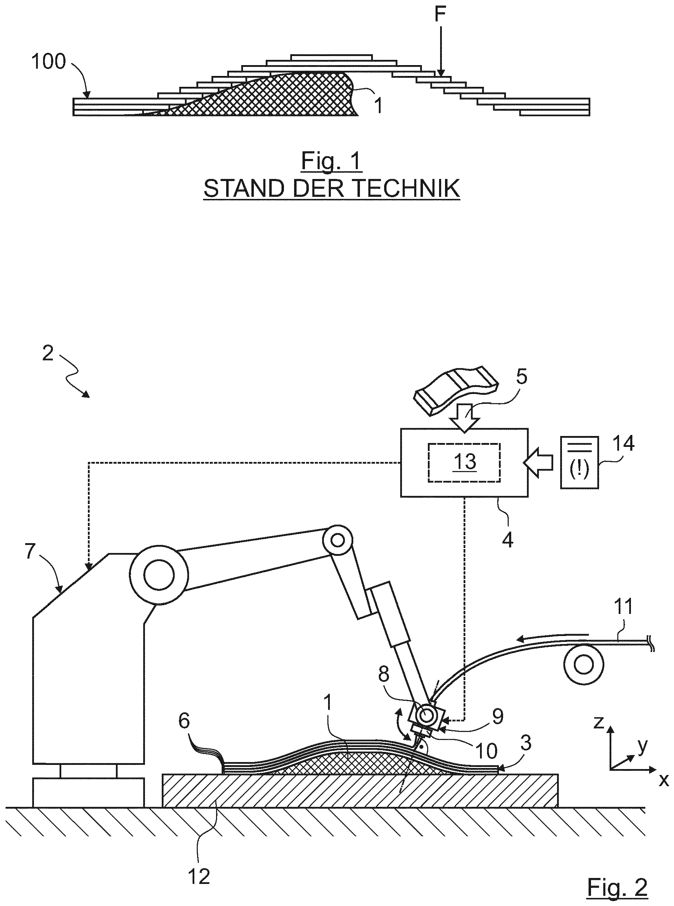

Figur 1 zeigt ein nach einem herkömmlichen Verfahren zur additiven Fertigung hergestelltes, beispielhaftes dreidimensionales Objekt 100 in einer Seitenansicht. Das Objekt 100 wurde auf einer Stützstruktur 1 aus einem Trägermaterial aufgedruckt, wobei die Stützstruktur 1 auf der rechten Seite in Figur 1 zur besseren Darstellung des Objekts 100 ausgeblendet ist.

Im Rahmen des bekannten additiven Fertigungsverfahrens (auch als "3D-Druck" bezeichnet) entstehen bei Höhenänderungen (in "z-Richtung") des Objekts 100 zwingend die beispielhaft dargestellten Treppenstrukturen, wodurch die Oberfläche des Objekts 100 sehr rau ausfällt. Neben dem optischen Defizit leidet hierunter insbesondere die mechanische Stabilität des Objekts 100. Die einzelnen Schichtübergänge bzw. Treppenstufen stellen jeweils Bruchstellen dar, wenn beispielsweise eine, wie angedeutet, dargestellte Kraft F auf das Objekt 100 wirkt.

Unter anderem diesen Zustand gilt es erfindungsgemäß zu verbessern.

Eine erfindungsgemäße Vorrichtung 2 zur additiven Fertigung eines dreidimensionalen Objekts 3 aus wenigstens einem Ausgangsmaterial ist in Figur 2 dargestellt.

Die Vorrichtung 2 weist eine Steuereinrichtung 4 auf, die auf Grundlage von 3D-Daten 5 des zu fertigenden Objekts 3 zur Berechnung von Druckbahnen für abzuscheidende Schichten 6 des Ausgangsmaterials eingerichtet ist. Die Steuereinrichtung 4 ist in Figur 2 lediglich schematisch als "Blackbox" dargestellt. Zur Durchführung des nachfolgend noch näher beschriebenen Verfahrens kann beispielsweise ein Computerprogrammprodukt mit Programmcodemitteln vorgesehen sein, wenn das Programm auf der Steuereinrichtung 4 der Vorrichtung 2 ausgeführt wird.

Die Vorrichtung 2 umfasst ferner eine in mehreren Freiheitsgraden bewegliche Aktuatoreinrichtung 7 mit einem Endeffektor 8. Bei dem Endeffektor 8 handelt es sich um das letzte Element in der kinematischen Kette der Aktuatoreinrichtung 7. Beispielsweise kann es sich um einen Greifer handeln. Die lediglich beispielhaft dargestellte Aktuatoreinrichtung 7 ist als Industrieroboter ausgebildet und in zumindest vier Freiheitsgraden, insbesondere in drei Translationsfreiheitsgraden und einem weiteren Freiheitsgrad beweglich. Die Aktuatoreinrichtung 7 kann allerdings auch in mehr als vier Freiheitsgraden beweglich sein. Vorzugsweise ist die Aktuatoreinrichtung 7 in allen sechs Freiheitsgraden beweglich.

Die Vorrichtung 2 umfasst ferner einen an dem Endeffektor 8 der Aktuatoreinrichtung 7 befestigten Extruder 9 bzw. Druckkopf. Der Extruder 9 weist eine Heizeinrichtung 10 auf, um ein zugeführtes Filament 11, beispielsweise ein Filament 11 aus einem thermoplastischen Kunststoff, an seinem sogenannten "Hot End" zu erhitzen und in flüssiger Form aus einer Düse abzuscheiden. Dadurch, dass der Extruder 9 an dem Endeffektor 8 der in vier bis sechs Freiheitsgraden beweglichen Aktuatoreinrichtung 7 befestigt ist, kann der Extruder 9 während des Abscheidens des Ausgangsmaterials unter anderem verkippt und in der Höhe (z-Richtung) verstellt werden.

Die Aktuatoreinrichtung 7 und der Extruder 9 sind mit der Steuereinrichtung 4 kommunikationsverbunden (in Figur 2 gestrichelt angedeutet), um das Ausgangsmaterial nach Vorgabe der Steuereinrichtung 4 in Abhängigkeit der berechneten Druckbahnen schichtweise aus dem Extruder 9 abzuscheiden. Das dreidimensionale Objekt 3 kann auf einer beheizbaren Trägerplatte 12, beispielsweise auch unter Zuhilfenahme einer Stützstruktur 1 aus einem Trägermaterial, aufgedruckt werden.

Aufgrund der erfindungsgemäß verbesserten Beweglichkeit des Extruders 9 kann ggf. auch auf eine Stützstruktur 1 verzichtet werden. Das Objekt 3 kann ggf. vollständig ohne Stützstruktur 1 gefertigt werden. Es kann auch vorgesehen sein, das Objekt 3 auf einem bereits bestehenden, zweiten Objekt oder einer bereits bestehenden Baugruppe aufzudrucken.

Schließlich kann auch vorgesehen sein, dass das Objekt 3 in eine Bauteilform, beispielsweise in ein Negativ des Objekts 3, eingedruckt wird. Die Bauteilform kann optional beheizt werden und/oder eine Zwischenschicht zum besseren Entfernen des Objekts 3 aus der Form aufweisen.

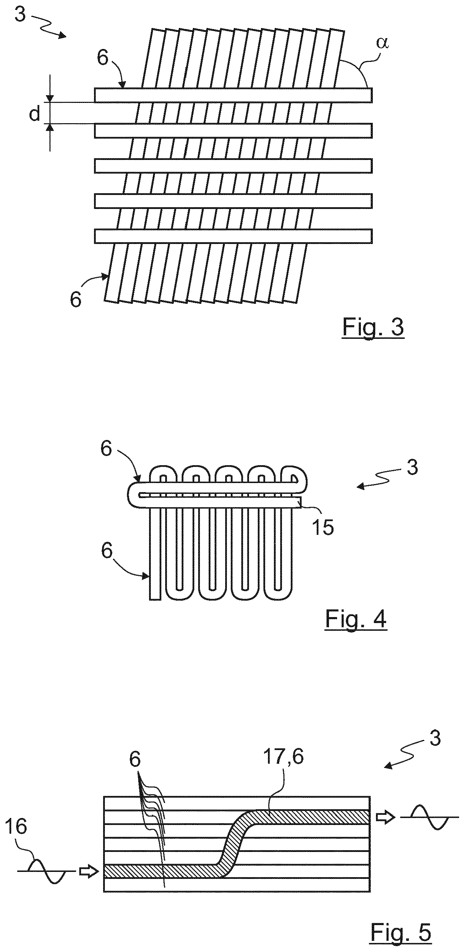

Die Steuereinrichtung 4 berechnet die Druckbahnen unter Berücksichtigung von Bahnabständen d (vgl. Figur 3), Ausrichtung und/oder Verlauf der abzuscheidenden Schichten 6 auf Grundlage eines Simulationsmodells 13, um gewünschte Bauteileigenschaften für das Objekt 3 vorzugeben. Der Steuereinrichtung 4 bzw. dem Simulationsmodell 13 kann eine entsprechende Zielfunktion 14 vorgegeben werden, wie in Figur 2 angedeutet.

Ein nach der erfindungsgemäßen Vorrichtung 2 oder nach dem erfindungsgemäßen Verfahren hergestelltes dreidimensionales Objekt 3 weist vorzugsweise äquidistante Schichten 6 wenigstens eines Ausgangsmaterials auf.

Es kann vorgesehen sein, dass das Objekt 3 aus verschiedenen Ausgangsmaterialien gefertigt wird. Hierfür kann beispielsweise vorgesehen sein, dass der Extruder 9 ausgebildet ist, um Druckbahnen aus verschiedenen Ausgangsmaterialien abzuscheiden. Beispielsweise kann der Extruder 9 ausgebildet sein, verschiedene Filamente 11 aufzunehmen und durch entsprechende Düsen abzuscheiden. Es kann beispielsweise auch eine Wechseleinrichtung zum Auswechseln des Extruders 9 vorgesehen sein (nicht dargestellt). Der Extruder 9 kann manuell oder automatisch ausgetauscht werden. Grundsätzlich können auch mehrere Aktuatoreinrichtungen 7 mit an den jeweiligen Endeffektoren 8 befestigten Extrudern 9 vorgesehen sein, um ein Objekt 3 aus mehreren Ausgangsmaterialien zu fertigen. Beispielsweise kann das Objekt 3 als Faserverbundwerkstoff, insbesondere als Laminat, gefertigt werden.

Erfindungsgemäß kann das Ausgangsmaterial derart abgeschieden werden, dass die Druckbahnen wenigstens einer Schicht 6 der dreidimensionalen Kontur des Objekts 3 stufenlos folgen. Die Druckbahnen können hierzu beispielsweise orthogonal zu der Oberfläche des Objekts 3 abgeschieden werden, wie in Figur 2 angedeutet. Der Extruder 9 bzw. der Endeffektor 8 der Aktuatoreinrichtung 7 kann entsprechend der erfindungsgemäß erweiterten Freiheitsgrade verkippt werden. Vorzugsweise können die Schichten 6 in äquidistanten Bahnabständen d abgeschieden werden, wie in Figur 2 dargestellt.

Dadurch, dass der Extruder 9 in vorzugsweise sechs Freiheitsgraden beweglich ist, kann der in Figur 1 dargestellte Treppeneffekt bei der additiven Fertigung des dreidimensionalen Objekts 3 erfindungsgemäß vermieden werden. Die mechanischen Bauteileigenschaften können hierdurch in hohem Maße verbessert sein.

Wie bereits erwähnt, können die Bauteileigenschaften durch Beeinflussung der Bahnabstände d, der Ausrichtung und/oder dem Verlauf der abzuscheidenden Schichten 6 vorgegeben werden. In Figur 3 ist eine beispielhafte und rein exemplarisch zu verstehende Draufsicht auf zwei abgeschiedene Schichten 6 eines dreidimensionalen Objekts 3 während dessen Herstellung dargestellt. Durch die Variierung der Bahnabstände d können beispielsweise lokale Bauteileigenschaften von der Steuereinrichtung 4 berücksichtigt werden. Ferner kann die Ausrichtung der abzuscheidenden Schichten 6 zur Vorgabe globaler Bauteileigenschaften vorgesehen sein. Beispielsweise kann ein Winkel □ der Druckbahnen zwischen verschiedenen Schichten 6 variiert werden.

Erfindungsgemäß ist vorgesehen, dass eine durchgängige Faser 15 des Ausgangsmaterials abgeschieden wird, die durch eine, vorzugsweise zwei oder mehr Schichten 6 des Objekts 3 verläuft. Dies ist beispielhaft in Figur 4 dargestellt. Die mechanische Stabilität des gesamten Objekts 3 kann hierdurch noch weiter erhöht werden.

Neben der Berechnung der Bahnabstände d, Ausrichtung und/oder des Verlaufs der abzuscheidenden Schichten 6 zur Vorgabe einer mechanischen Festigkeit kann von der Steuereinrichtung 4 zur Bestimmung der genannten Parameter auch eine elektrische Eigenschaft, insbesondere eine elektrische Leitfähigkeit, und/oder eine optische Eigenschaft, insbesondere ein Brechungsindex, berücksichtigt werden. Beispielsweise kann die Ausrichtung und der Verlauf von Schichtübergängen gemäß einem definierten Winkel zu einer vorgesehenen Ausbreitungsrichtung einer durch das Objekt 3 zu übertragenden elektromagnetischen Welle 16 (beispielsweise Licht) von der Steuereinrichtung 4 bestimmt werden. Figur 5 zeigt beispielhaft, wie ein Lichtwellenleiter 17 (oder ein sonstiger Wellenleiter) in ein erfindungsgemäß gefertigtes dreidimensionales Objekt 3 vorteilhaft eingebettet werden kann.

Zur Bestimmung der Bahnabstände d, der Ausrichtung und/oder des Verlaufs der abzuscheidenden Schichten 6 kann in dem Simulationsmodell 13 eine mechanische Krafteinleitung und/oder Zug/Druckrichtung, eine Ausbreitungsrichtung einer elektromagnetischen Welle 16 und/oder ein Stromfluss durch das Objekt 3 berücksichtigt werden.

Das erfindungsgemäße Verfahren oder die erfindungsgemäße Vorrichtung 2 können vorteilhaft zur additiven Fertigung eines Faserverbundwerkstoffs, eines Wellenleiters, eines Lichtwellenleiters 17, eines elektrischen Leiters oder eines Leichtbauteils verwendet werden.

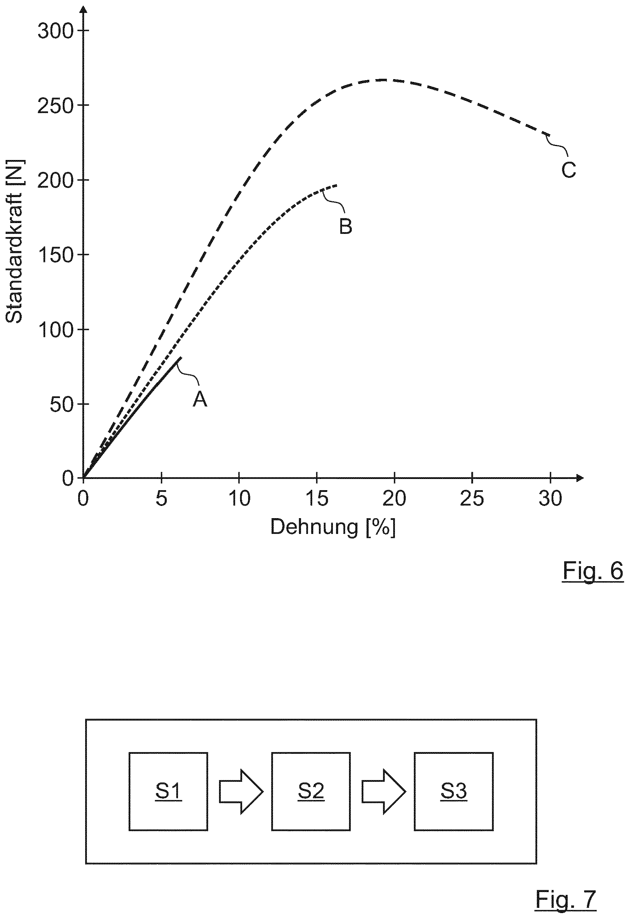

Zur Verdeutlichung der erfindungsgemäßen Vorteile ist in Figur 6 ein auf experimenteller Basis ermittelter Vergleich von Biegeproben dargestellt. Es ist erkennbar, dass die Widerstandsfähigkeit eines mit herkömmlicher additiver Fertigung hergestellten Objekts 100 (Kurve A) insbesondere aufgrund der in Figur 1 dargestellten Treppenstruktur im Vergleich mit dem erfindungsgemäß gefertigten dreidimensionalen Objekt 3 (Kurve B) deutlich verringert ist. Kurve C stellt ein voraussichtlich optimales Ergebnis für ein erfindungsgemäß gefertigtes, dreidimensionales Objekt 3 nach entsprechender Optimierung der Vorrichtung 2 bzw. des Verfahrens dar.

Figur 7 zeigt in vereinfachter Form ein erfindungsgemäßes Verfahren zur additiven Fertigung des dreidimensionalen Objekts 3 aus wenigstens einem Ausgangsmaterial. Auf Grundlage der 3D-Daten 5 des zu fertigenden Objekts 3 berechnet die Steuereinrichtung 4 in einem ersten Verfahrensschritt S1 die Druckbahnen für eine schichtweise Abscheidung wenigstens eines Ausgangsmaterials aus dem Extruder 9, der an dem Endeffektor 8 der in mehreren Freiheitsgraden beweglichen Aktuatoreinrichtung 7 befestigt ist. In einem zweiten Verfahrensschritt S2 wird die Aktuatoreinrichtung 7 in zumindest vier, vorzugsweise fünf, besonders bevorzugt sechs Freiheitsgraden bewegt, um das Ausgangsmaterial abzuscheiden, wobei die Steuereinrichtung 4 die Bahnabstände d, die Ausrichtung und/oder den Verlauf der abzuscheidenden Schichten 6 auf Grundlage des Simulationsmodells 13 zur Vorgabe der Bauteileigenschaften des Objekts 3 festlegt. In einem optionalen, dritten Verfahrensschritt S3 kann eine Nachbearbeitung des Objekts 3 vorgesehen sein.

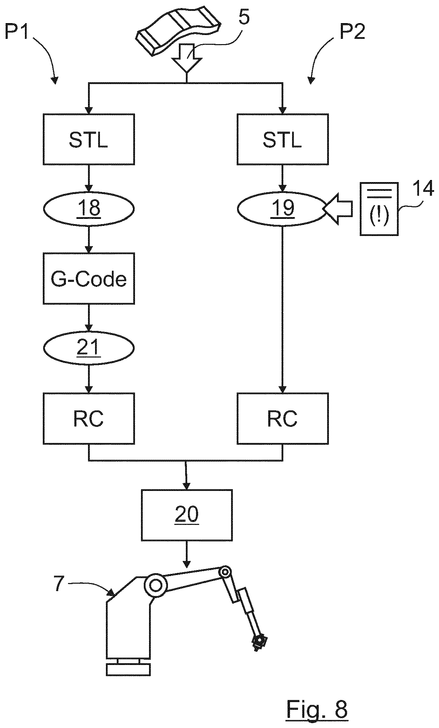

Figur 8 zeigt einen beispielhaften Verfahrensablauf innerhalb der Steuereinrichtung 4, beispielsweise im Rahmen eines Computerprogrammprodukts, in weiterem Detail. Ausgangspunkt sind 3D-CAD-Daten 5 für das zu fertigende Objekt 3. In einem ersten Verfahrenspfad P1 wird der Werkzeugpfad einer optional zu druckenden Stützstruktur 1 aus einem Trägermaterial und in einem zweiten Verfahrenspfad P2 der Werkzeugpfad des Bauteils bzw. des Objekts 3 berechnet. Aus den 3D-Daten 5 des Objekts 3 kann zunächst ein STL-basiertes, virtuelles Modell des Objekts 3 berechnet werden. Grundsätzlich kann anstelle der 3D-CAD-Daten 5 des Objekts 3 auch ein entsprechendes virtuelles STL-Modell bereits als Ausgangspunkt für die Berechnung in die Steuereinrichtung 4 eingegeben werden. Auch die STL-Daten können somit als 3D-Daten 5 im Rahmen der Erfindung bezeichnet werden.

Auf Grundlage der STL-Daten werden die einzelnen abzuscheidenden Schichten 6 berechnet. Da es bei der Stützstruktur 1 auf besondere Stabilitäts- oder sonstige Eigenschaften in der Regel nicht ankommt, können die Schichten 6 im Rahmen des ersten Verfahrenspfades P1 ressourcenschonend mittels eines herkömmlichen "3D-Slicer"-Moduls 18 für einen herkömmlichen 3D-Druck berechnet werden. Im Rahmen der Berechnung der Druckbahnen für das zu fertigende Objekt 3 (zweiter Verfahrenspfad P2) kann ein im Rahmen der Erfindung als "6D-Slicer"-Modul 19 bezeichnetes Modul vorgesehen sein, beispielsweise zur Berechnung von äquidistanten Schichten 6 des Objekts 3. Die gewünschten und im Rahmen der Steuereinrichtung 4 zur Berechnung der Druckbahnen zu berücksichtigenden Bauteileigenschaften (z. B. die Zielfunktion 14) können dem 6D-Slicer-Modul 19 zugeführt bzw. in diesem berücksichtigt werden.

Schließlich kann der Werkzeugpfad, beispielsweise als sogenannter "Rapid-Code" (RC) zur Ansteuerung der Aktuatoreinrichtung 7 für Stützstruktur 1 und das Objekt 3 jeweils berechnet und in einem gemeinsamen Druckprogramm 20 kombiniert an die Aktuatoreinrichtung 7 und den Extruder 9 übermittelt werden. Hinsichtlich der Stützstruktur 1 kann auf Basis der Daten des 3D-Slicer-Moduls 18 zunächst ein Werkzeugpfad für einen herkömmlichen 3D-Drucker, beispielsweise in einem bekannten "G-Code", berechnet und anschließend mittels eines Konverter-Moduls 21 in einen spezifischen Werkzeugpfad für die im Rahmen der vorliegenden Erfindung vorgesehenen Aktuatoreinrichtung 7 konvertiert werden.

Das in Figur 8 dargestellte Ablaufdiagramm ist nur beispielhaft zu verstehen und soll lediglich das grundsätzliche Funktionsprinzip verdeutlichen.

**Patentansprüche**

1. Vorrichtung (2) zur additiven Fertigung eines dreidimensionalen Objekts (3) aus wenigstens einem Ausgangsmaterial, aufweisend

   a) eine Steuereinrichtung (4), die auf Grundlage von 3D-Daten (5) des Objekts (3) zur Berechnung von Druckbahnen für abzuscheidende Schichten (6) des Ausgangsmaterials eingerichtet ist;
   b) eine in mehreren Freiheitsgraden bewegliche Aktuatoreinrichtung (7) mit einem Endeffektor (8); und
   c) einen an dem Endeffektor (8) befestigten Extruder (9) oder Druckkopf,
   wobei die Aktuatoreinrichtung (7) und der Extruder (9) bzw. Druckkopf mit der Steuereinrichtung (4) kommunikationsverbunden sind, um das Ausgangsmaterial nach Vorgabe der Steuereinrichtung (4) in Abhängigkeit der berechneten Druckbahnen schichtweise aus dem Extruder (9) bzw. Druckkopf abzuscheiden, wobei die Aktuatoreinrichtung (7) in zumindest vier Freiheitsgraden beweglich ist, wobei die Steuereinrichtung (4) die Druckbahnen unter Berücksichtigung von Bahnabständen (d), Ausrichtung und/oder Verlauf der abzuscheidenden Schichten (6) auf Grundlage eines Simulationsmodells (13) berechnet, um Bauteileigenschaften des Objekts (3) vorzugeben,
   wobei die Steuereinrichtung (4) so eingerichtet ist, dass eine durchgängige Faser (15) des Ausgangsmaterials abgeschieden werden kann, die durch zumindest zwei Schichten (6) des Objekts (3) verläuft.

2. Vorrichtung (2) nach Anspruch 1,
   **dadurch gekennzeichnet, dass**
   die Aktuatoreinrichtung (7) in vier Freiheitsgraden, vorzugsweise in fünf Freiheitsgraden oder mehr Freiheitsgraden und besonders bevorzugt in sechs Freiheitsgraden, beweglich ist.

3. Verfahren zur additiven Fertigung eines dreidimensionalen Objekts (3) aus wenigstens einem Ausgangsmaterial, wonach das Ausgangsmaterial nach Vorgabe von Druckbahnen durch eine Steuereinrichtung (4) schichtweise aus einem Extruder (9) oder Druckkopf, der an einem Endeffektor (8) einer in mehreren Freiheitsgraden beweglichen Aktuatoreinrichtung (7) befestigt ist, abgeschieden wird, wobei die Aktuatoreinrichtung (7) in zumindest vier Freiheitsgraden bewegt wird, um das Ausgangsmaterial abzuscheiden, und wobei die Steuereinrichtung (4) Bahnabstände (d), Ausrichtung und/oder Verlauf der abzuscheidenden Schichten (6) auf Grundlage eines Simulationsmodells (13) zur Vorgabe von Bauteileigenschaften des Objekts (3) festlegt,
   wobei eine durchgängige Faser (15) des Ausgangsmaterials abgeschieden wird, die durch zumindest zwei Schichten (6) des Objekts (3) verläuft.

4. Verfahren nach Anspruch 3,
   **dadurch gekennzeichnet, dass**
   das Ausgangsmaterial derart abgeschieden wird, dass die Druckbahnen wenigstens einer Schicht (6) der dreidimensionalen Kontur des Objekts (3) stufenlos folgen.

5. Verfahren nach Anspruch 3 oder 4,
   **dadurch gekennzeichnet, dass**
   die Druckbahnen orthogonal zu der Oberfläche des Objekts (3) abgeschieden werden.

6. Verfahren nach einem der Ansprüche 3 bis 5,

**dadurch gekennzeichnet, dass**
die Schichten (6) in äquidistanten Bahnabständen (d) abgeschieden werden.

7. Verfahren nach einem der Ansprüche 3 bis 6,
**dadurch gekennzeichnet, dass**
zumindest zwei Ausgangsmaterialien abgeschieden werden, um das Objekt (3) als Faserverbundwerkstoff, insbesondere als Laminat, zu fertigen.

8. Verfahren nach einem der Ansprüche 3 bis 7,
**dadurch gekennzeichnet, dass**
zur Vorgabe lokaler Bauteileigenschaften die Bahnabstände (d) der abzuscheidenden Schichten (6) von der Steuereinrichtung (4) berücksichtigt werden.

9. Verfahren nach einem der Ansprüche 3 bis 8,
**dadurch gekennzeichnet, dass** zur Vorgabe globaler Bauteileigenschaften die Ausrichtung der abzuscheidenden Schichten (6) von der Steuereinrichtung (4) berücksichtigt wird.

10. Verfahren nach einem der Ansprüche 3 bis 9,
**dadurch gekennzeichnet, dass**
die Steuereinrichtung (4) die Bahnabstände (d), die Ausrichtung und/oder den Verlauf der abzuscheidenden Schichten (6) zur Vorgabe von Dehnungseigenschaften, einer mechanischen Festigkeit, einer Oberflächengüte, einer elektrischen Eigenschaft, insbesondere einer elektrischen Leitfähigkeit, und/oder einer optischen Eigenschaft, insbesondere einem Brechungsindex, berücksichtigt.

11. Verfahren nach einem der Ansprüche 3 bis 10,
**dadurch gekennzeichnet, dass**
die Ausrichtung von Schichtübergängen von der Steuereinrichtung (4) gemäß einem definierten Winkel zu einer vorgesehenen Ausbreitungsrichtung einer durch das Objekt (3) zu übertragenden elektromagnetischen Welle (16) bestimmt wird.

12. Verfahren nach einem der Ansprüche 3 bis 11,
**dadurch gekennzeichnet, dass**
in dem Simulationsmodell (13) eine mechanische Krafteinleitung und/oder Zug/Druckrichtung, eine Ausbreitungsrichtung einer elektromagnetischen Welle (16) und/oder ein Stromfluss durch das Objekt (3) berücksichtigt wird.

13. Verfahren nach einem der Ansprüche 3 bis 12,
**dadurch gekennzeichnet, dass**
es sich bei dem Objekt (3) um einen Wellenleiter, einen Lichtwellenleiter (17), einen elektrischen Leiter oder ein Leichtbauteil handelt.


**Claims**

1. A device (2) for additive manufacturing of a three-dimensional object (3) from at least one starting material, comprising

   a) a control device (4) which, on the basis of 3D data (5) of the object (3), is set up to calculate print paths for layers (6) of the starting material to be deposited;
   b) an actuator device (7) movable in several degrees of freedom with an end effector (8); and
   c) an extruder (9) or print head attached to the end effector (8),
   wherein the actuator device (7) and the extruder (9) and print head, respectively, are connected for communication with the control device (4) in order to deposit the starting material layer by layer from the extruder (9) and print head, respectively, as specified by the control device (4) in dependence on the calculated print paths, wherein the actuator device (7) is movable in at least four degrees of freedom, wherein the control device (4) controls the print paths taking into account path distances (d), alignment and/or course of the layers (6) to be deposited on the basis of a simulation model (13) in order to specify component properties of the object (3), wherein the control device (4) is arranged to deposit a continuous fiber (15) of the starting material that passes through at least two layers (6) of the object (3).

**2.** The device (2) according to claim 1,
**characterized in that**
the actuator device (7) is movable in four degrees of freedom, preferably in five degrees of freedom or more and particularly preferably in six degrees of freedom.

**3.** A method for the additive manufacturing of a three-dimensional object (3) from at least one starting material, according to which the starting material is deposited layer by layer from an extruder (9) and print head, respectively, which is attached to an end effector (8) of an actuator device (7) movable in several degrees of freedom, by a control device (4) according to the specification of print paths, the actuator device (7) being moved in at least four degrees of freedom in order to deposit the starting material, and the control device (4) determining path distances (d), alignment and/or course of the layers (6) to be deposited on the basis of a simulation model (13) for specifying component properties of the object (3),
wherein a continuous fiber (15) of the starting material is deposited which passes through at least two layers (6) of the object (3).

**4.** The method according to claim 3,
**characterized in that**
the starting material is deposited in such a way that the print paths of at least one layer (6) follow the three-dimensional contour of the object (3) steplessly.

**5.** The method according to claim 3 or 4,
**characterized in that**
the print paths are deposited orthogonally to the surface of the object (3).

**6.** The method according to any one of claims 3 to 5,
**characterized in that**
the layers (6) are deposited at equidistant path intervals (d).

**7.** The method according to any one of claims 3 to 6,
**characterized in that**
at least two starting materials are deposited to produce the object (3) as a fiber composite material, in particular as a laminate.

**8.** The method according to any one of claims 3 to 7,
**characterized in that**
the path distance (d) of the layers (6) to be deposited is taken into account by the control device (4) in order to specify local component properties.

**9.** The method according to any one of claims 3 to 8,
**characterized in that**
the alignment of the layers (6) to be deposited is taken into account by the control device (4) in order to specify global component properties.

**10.** The method according to any one of claims 3 to 9,
**characterized in that**
the control device (4) takes into account the path distance (d), the alignment and/or the course of the layers (6) to be deposited in order to specify elongation properties, a mechanical strength, a surface quality, an electrical property, in particular an electrical conductivity, and/or an optical property, in particular a refractive index.

**11.** The method according to any one of claims 3 to 10,
**characterized in that**
the alignment of layer transitions is determined by the control device (4) according to a defined angle to an intended propagation direction of an electromagnetic wave (16) to be transmitted by the object (3).

**12.** The method according to any one of claims 3 to 11,
**characterized in that**
in the simulation model (13) a mechanical force application and/or tension/compression direction, a propagation direction of an electromagnetic wave (16) and/or a current flow through the object (3) is taken into account.

**13.** The method according to any one of claims 3 to 12,
**characterized in that** the
object (3) is a waveguide, an optical waveguide (17), an electrical conductor or a lightweight component.

**Revendications**

**1.** Dispositif (2) pour la fabrication additive d'un objet tridimensionnel (3) à partir d'au moins un matériau de départ, présentant

a) un dispositif de commande (4) qui, sur la base de données 3D (5) de l'objet (3), est conçu pour calculer des trajectoires d'impression pour des couches (6) à déposer du matériau de départ ;
b) un dispositif actionneur (7) mobile selon plusieurs degrés de liberté, comprenant un effecteur terminal (8) ; et
c) une extrudeuse (9) ou une tête d'impression fixée à l'effecteur terminal (8),
le dispositif actionneur (7) et l'extrudeuse (9) ou bien la tête d'impression étant reliés en communication avec le dispositif de commande (4), afin d'extraire le matériau de départ de l'extrudeuse (9) ou bien de la tête d'impression, couche par couche, selon les indications du dispositif de commande (4), en fonction des trajectoires d'impression calculées, le dispositif actionneur (7) étant mobile selon au moins quatre degrés de liberté, le dispositif de commande (4) calculant les trajectoires d'impression en tenant compte des distances (d) entre les trajectoires, de l'orientation et/ou de l'allure des couches (6) à déposer, sur la base d'un modèle de simulation (13), afin de prédéfinir les propriétés de construction de l'objet (3),
dans lequel le dispositif de commande (4) est agencé de manière à permettre le dépôt d'une fibre continue (15) du matériau de départ, qui traverse au moins deux couches (6) de l'objet (3).

**2.** Dispositif (2) selon la revendication 1,
**caractérisé en ce que**
le dispositif d'actionnement (7) est mobile dans quatre degrés de liberté, de préférence dans cinq degrés de liberté ou plus et de manière particulièrement préférée dans six degrés de liberté.

**3.** Procédé de fabrication additive d'un objet tridimensionnel (3) à partir d'au moins un matériau de départ, selon lequel le matériau de départ est extrait couche par couche d'une extrudeuse (9) ou bien d'une tête d'impression, qui est fixée à un effecteur d'extrémité (8) d'un dispositif d'actionnement (7) mobile dans plusieurs degrés de liberté, après avoir été prédéfini par des trajectoires d'impression par un dispositif de commande (4), le dispositif actionneur (7) étant déplacé dans au moins quatre degrés de liberté pour déposer le matériau de départ, et le dispositif de commande (4) définissant des distances de bande (d), l'orientation et/ou le tracé des couches (6) à déposer sur la base d'un modèle de simulation (13) pour prédéfinir des propriétés de composant de l'objet (3),
dans lequel une fibre continue (15) du matériau de départ est déposée, qui s'étend à travers au moins deux couches (6) de l'objet (3).

**4.** Procédé selon la revendication 3,
**caractérisé en ce que**
le matériau de départ est déposé de telle sorte que les pistes d'impression d'au moins une couche (6) suivent en continu le contour tridimensionnel de l'objet (3).

**5.** Procédé selon la revendication 3 ou 4,
**caractérisé en ce que**
les pistes d'impression sont déposées orthogonalement à la surface de l'objet (3).

**6.** Procédé selon l'une quelconque des revendications 3 à 5,
**caractérisé en ce que**
les couches (6) sont déposées à des distances de trajectoire équidistantes (d).

**7.** Procédé selon l'une quelconque des revendications 3 à 6,
**caractérisé en ce que**
au moins deux matériaux de départ sont déposés pour fabriquer l'objet (3) sous forme de matériau composite à fibres, en particulier sous forme de stratifié.

**8.** Procédé selon l'une quelconque des revendications 3 à 7,

**caractérisé en ce que**
les distances (d) entre les trajectoires des couches (6) à déposer sont prises en compte par le dispositif de commande (4) pour prédéfinir les propriétés locales des composants.

9. Procédé selon l'une quelconque des revendications 3 à 8,
**caractérisé en ce que**
l'orientation des couches à déposer (6) est prise en compte par le dispositif de commande (4) pour prédéfinir des propriétés globales de la pièce.

10. Procédé selon l'une quelconque des revendications 3 à 9,
**caractérisé en ce que**
le dispositif de commande (4) tient compte des distances (d) entre les bandes, de l'orientation et/ou du tracé des couches (6) à déposer pour prédéfinir des propriétés d'allongement, une résistance mécanique, une qualité de surface, une propriété électrique, en particulier une conductivité électrique, et/ou une propriété optique, en particulier un indice de réfraction.

11. Procédé selon l'une quelconque des revendications 3 à 10,
**caractérisé en ce que**
l'orientation des transitions de couches est déterminée par le dispositif de commande (4) selon un angle défini par rapport à une direction de propagation prévue d'une onde électromagnétique (16) à transmettre par l'objet (3).

12. Procédé selon l'une quelconque des revendications 3 à 11,
**caractérisé en ce que**
dans le modèle de simulation (13), on prend en compte une introduction de force mécanique et/ou une direction de traction/compression, une direction de propagation d'une onde électromagnétique (16) et/ou un flux de courant à travers l'objet (3).

13. Procédé selon l'une quelconque des revendications 3 à 12,
**caractérisé en ce que**
l'objet (3) est un guide d'ondes, un guide d'ondes optiques (17), un conducteur électrique ou un élément léger.

100

F

1

## Fig. 1
## STAND DER TECHNIK

2

5

13

14

4

7

11

8

1

6

9

10

3

z

y

x

12

## Fig. 2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009046440 A1
- DE 112014006195 T5
- US 2017259502 A1
- WO 2018039260 A1
- US 2017232679 A1